# EUROPEAN PATENT APPLICATION

(11) **EP 4 718 747 A1**
(43) Date of publication of application: **01.04.2026**
(21) Application number: 24830160.8
(22) Date of filing: 07.05.2024
(51) Int. Cl.: H04B 10/25

(54) **METHOD, SYSTEM, AND RELATED DEVICE**

(30) Priority: 26.06.2023 CN 202310764128
(71) Applicant: Huawei Technologies Co., Ltd., Shenzhen, Guangdong 518129 (CN)
(72) Inventor: WANG, Fujiang, Shenzhen, Guangdong 518129 (CN); DING, Zhongkui, Shenzhen, Guangdong 518129 (CN)
(74) Representative: Körber, Martin Hans
(86) International application number: PCT/CN2024/091383
(87) International publication number: WO 2025/001512

(57) **Abstract**

A method, a system, and a related device are provided. The method includes: A controller may determine a first optical channel between an optical transmitting device and an optical receiving device in a first slot based on a data transmission request, and then send configuration information to the optical transmitting device or the optical receiving device, to indicate the optical transmitting device or the optical receiving device to transmit data in the first slot based on an amplitude compensation coefficient of the first optical channel. This helps compensate for amplitude distortion caused by the first optical channel and reduce a bit error rate.

## Description

This application claims priority to Chinese Patent Application No. 202310764128.4, filed with the China National Intellectual Property Administration on June 26, 2023 and entitled "METHOD, SYSTEM, AND RELATED DEVICE", which is incorporated herein by reference in its entirety.

### TECHNICAL FIELD

This application relates to the field of optical communication technologies, and in particular, to a method, a system, and a related device.

### BACKGROUND

An optical network is usually a point-to-multipoint or multipoint-to-multipoint communication system. An optical receiving device may receive optical signals from different optical transmitting devices in different slots. Usually, there is a relatively large amplitude difference between different optical signals, and there is a relatively large difference (referred to as an amplitude error) between amplitudes of some optical signals and signal amplitudes required by the optical receiving device for recovering data. For example, when an amplitude of an optical signal is excessively large, the optical receiving device may incorrectly recover data "0" carried in the optical signal to "1". When an amplitude of an optical signal is excessively small, the optical receiving device may incorrectly recover data "1" carried in the optical signal to "0". This reduces data recovery accuracy of the optical receiving device, and increases a bit error rate of optical communication.

To reduce a bit error rate, before occupying a slot to send data (or referred to as a payload) to an optical receiving device, an optical transmitting device needs to occupy the slot to additionally send a preamble to the optical receiving device. The preamble is data pre-learned by the optical receiving device. The optical receiving device receives the preamble to detect an amplitude error, adjust an amplitude of a signal (this is referred to as amplitude recovery), and obtain the data from the signal on which amplitude recovery is performed.

Currently, an amplitude recovery delay of the optical receiving device is relatively long, and preamble overheads are relatively large, reducing data transmission efficiency of optical communication.

### SUMMARY

This application provides a method, a system, and a related device, to reduce an amplitude recovery delay and improve data transmission efficiency in an optical communication process.

According to a first aspect, this application provides a method. The method may be applied to a system, the system may be an optical network, and the system may include a plurality of optical communication devices, an optical interconnection network, and a controller. An optical communication device that has at least a function of sending an optical signal in the plurality of optical communication devices or an optical module (or an optical interface) in the optical communication device is referred to as an optical transmitting device, and an optical communication device that has at least a function of receiving an optical signal in the plurality of optical communication devices or an optical module in the optical communication device is referred to as an optical receiving device. The optical interconnection network is configured to provide an optical channel (or referred to as an optical link or an optical path) between different optical communication devices. The optical channel is used to transmit an optical signal. For example, the optical channel includes or passes through one or more optical fibers. In this application, an optical channel that is in the optical interconnection network and that is used to transmit, to the optical receiving device in a first slot, an optical signal sent by the optical transmitting device is referred to as a first optical channel.

The system may transmit data in a TDMA manner. After the system allocates a slot for data or data transmission, the optical transmitting device sends the data in the slot, the optical interconnection network provides an optical channel between the optical transmitting device and the optical receiving device in the slot, and the optical receiving device receives the data in the slot. A same optical receiving device may receive data from different optical transmitting devices in a time division manner.

When the optical transmitting device has a requirement for sending data (referred to as first data) to an optical receiving device in a slot (referred to as a first slot), the optical transmitting device may send the data transmission request to the controller. The data transmission request indicates that the optical transmitting device has the requirement for sending the first data to the optical receiving device in the first slot. Correspondingly, the controller may receive the data transmission request.

For different optical channels, amplitudes of input optical signals (or transmit power of optical signals), distances of optical links, channel conditions, and the like usually differ greatly. Therefore, in a process of transmitting an optical signal from the optical transmitting device to the optical receiving device, different optical channels cause amplitude distortion (or amplitude errors) at different degrees on the optical signal. An amplitude compensation coefficient may be configured in the optical transmitting device to compensate for the amplitude error in the optical signal. The controller may determine a first optical channel between the optical transmitting device and the optical receiving device based on the data transmission request, and then send configuration information to the optical transmitting device. The configuration information indicates the optical transmitting device to send the first data in the first slot based on a first amplitude compensation coefficient of the first optical channel, an amplitude compensation coefficient is used to compensate for amplitude distortion, and the first amplitude compensation coefficient of the first optical channel may be used to compensate for amplitude distortion caused by the first optical channel. Correspondingly, the optical transmitting device may receive the configuration information, carry the first data on an optical signal (referred to as a first optical signal) in the first slot based on the first amplitude compensation coefficient according to an indication of the configuration information, and then input the first optical signal on which amplitude compensation is performed into the first optical channel. This helps reduce an amplitude error existing when the first optical signal reaches the optical receiving device. The optical receiving device may perform data recovery on the first optical signal that is output by the first optical channel. This helps improve accuracy of data recovery performed by the optical receiving device on the first optical signal and reduce a bit error rate.

The optical receiving device may not need to configure the first amplitude compensation coefficient in the first slot by receiving a preamble. This helps reduce a link establishment delay of the optical receiving device, and improve data transmission efficiency of optical communication. Even if the optical receiving device still configures the first amplitude compensation coefficient by receiving the preamble, because the first optical signal compensated by a transmitting end reaches, after being transmitted through the first optical channel, the optical receiving device at a signal amplitude required by the optical receiving device or at an amplitude close to a signal amplitude required by the optical receiving device, this helps reduce a delay in configuring the first amplitude compensation coefficient by the optical receiving device, reduce overheads of the preamble, and improve data transmission efficiency of optical communication.

In addition, the optical transmitting device may determine, before actually sending the first optical signal, a requirement for sending the first optical signal to the optical receiving device. Therefore, this helps the optical transmitting device send the data transmission request to the controller before the first slot. When another impact factor is not considered, amplitude errors caused by a same optical channel on an optical signal in different slots are the same, that is, amplitude compensation coefficients required for an optical signal transmitted to the optical receiving device through a same optical channel in different slots are the same. Therefore, this helps the controller obtain the first amplitude compensation coefficient of the first optical channel before the first slot. The controller configures, based on the data transmission request and the first amplitude compensation coefficient of the first optical channel, the optical transmitting device to send the first optical signal, instead of configuring, by detecting an amplitude of the first optical signal, the optical receiving device to receive the first optical signal. This helps the optical transmitting device quickly complete configuration of the amplitude compensation coefficient when the first slot arrives, thereby reducing an amplitude recovery delay, and improving data transmission efficiency of optical communication.

Optionally, the controller may determine an identifier of the first optical channel based on the data transmission request, and then determine the first amplitude compensation coefficient based on the identifier of the first optical channel. Correspondingly, the configuration information may include the first amplitude compensation coefficient.

Optionally, after determining the identifier of the first optical channel, the controller may carry the identifier of the first optical channel on the configuration information. After receiving the configuration information, the optical transmitting device may determine the first amplitude compensation coefficient based on the identifier of the first optical channel. Correspondingly, the configuration information may not include the first amplitude compensation coefficient. This helps reduce a length of control information, and save transmission resources of a control channel.

For ease of description, in this application, an apparatus configured to determine the first amplitude compensation coefficient based on the identifier of the first optical channel is referred to as a determining apparatus, and the determining apparatus may be the controller, the optical transmitting device, or another device.

Optionally, the determining apparatus may obtain amplitude compensation information, where the amplitude compensation information indicates a correspondence between an identifier of an optical channel in the optical interconnection network and an amplitude compensation coefficient. After determining the identifier of the first optical channel, the determining apparatus may obtain, from the amplitude compensation information, an amplitude compensation coefficient (that is, the first amplitude compensation coefficient) corresponding to the identifier of the first optical channel.

A manner in which the amplitude compensation information indicates the correspondence is not limited in this application. For example, the amplitude compensation information may be a machine learning model or include one or more key-value pairs.

A location for storing the amplitude compensation information is not limited in this application. For example, the amplitude compensation information may be stored in the determining apparatus, or stored in an apparatus other than the determining apparatus.

A manner of determining the amplitude compensation information is not limited in this application.

For example, the determining apparatus or another apparatus may determine a correspondence between an identifier of an optical channel and an amplitude compensation coefficient based on parameter information of the optical channel, for example, may determine a correspondence between the identifier of the first optical channel and the first amplitude compensation coefficient based on parameter information of the first optical channel. The parameter information of the optical channel includes but is not limited to an amplitude of an optical signal that is input into the optical channel, a length of an optical fiber that the optical channel passes through, and/or a channel condition (for example, an attenuation status of a signal amplitude in a unit length). The parameter information of the optical channel may be used to measure an amplitude error caused by the optical channel.

For example, the determining apparatus or another apparatus may determine the amplitude compensation information based on an amplitude measurement result of an optical signal transmitted by the optical channel in the optical interconnection network in a second slot, and the second slot includes one or more slots before the first slot. An amplitude of the optical signal transmitted by the optical channel in the second slot may include an amplitude of an optical signal that is input into the optical channel in the second slot and/or an amplitude of an optical signal that is output from the optical channel in the second slot. For example, the determining apparatus or another apparatus may determine the correspondence between the identifier of the first optical channel and the first amplitude compensation coefficient based on an amplitude measurement result of an optical signal that is output by the first optical channel in the second slot.

After obtaining an amplitude measurement result (referred to as a first amplitude measurement result) of an optical signal that is output by the first optical channel in the second slot, the determining apparatus or another apparatus may use an amplitude compensation coefficient (that is, the first amplitude compensation coefficient) in a plurality of amplitude compensation coefficients that matches the first amplitude measurement result as the amplitude compensation coefficient corresponding to the identifier of the first optical channel. For example, the first amplitude compensation coefficient may be an amplitude compensation coefficient in the plurality of amplitude compensation coefficients that is closest to the first amplitude measurement result.

The first amplitude compensation coefficient may indicate a value of an amplitude (referred to as a first amplitude value) or a value of an amplification factor of an amplitude (referred to as a first amplification factor). The value indicated by the first amplitude compensation coefficient may be an absolute value or a relative value. It is assumed that the relative value indicated by the first amplitude compensation coefficient is a relative value of the value of the amplitude relative to a target value, and the target value is a determined value. A meaning of the target value is not limited in this application. For example, the target value may represent a maximum value of an amplitude compensation coefficient supported by the optical transmitting device, or the target value may represent an amplitude compensation coefficient configured by the optical transmitting device currently or by default, or the target value may be a value of a minimum amplitude variation supported by the optical transmitting device.

The optical interconnection network may provide a plurality of optical channels in a time division manner or at the same time, and the identifier of the first optical channel may be used to determine the first optical channel from the plurality of optical channels in the optical interconnection network. Optionally, at least two optical channels in the plurality of optical channels are separately used to transmit, to the optical receiving device, the optical signal sent by the optical transmitting device. For example, information about the first optical channel may include address information of at least one optical switching device that is included in the first optical channel or through which the first optical channel passes.

It is assumed that at least two optical channels include the first optical channel and a second optical channel, the second optical channel is also used to transmit, to the optical receiving device, an optical signal sent by the optical transmitting device, and the identifier of the first optical channel is different from an identifier of the second optical channel. Because an amplitude error caused by the second optical channel on the optical signal may be different from an amplitude error caused by the first optical channel on the optical signal, the determining apparatus determines the amplitude compensation coefficient based on an identifier of the optical channel. This helps more accurately compensate for the amplitude error in the signal and further reduce a bit error rate.

Optionally, the optical interconnection network includes one or more optical switching devices, and the controller is further configured to control, based on the data transmission request, the optical interconnection network to generate the first optical channel in the first slot. Correspondingly, the optical signal sent by the optical transmitting device in the first slot reaches the optical receiving device through the first optical channel. In this way, the amplitude compensation information that is in the first slot and that is indicated by the configuration information is more accurately used to compensate for an amplitude error in the optical signal received by the optical receiving device in the first slot, thereby reducing a bit error rate.

Optionally, after receiving the data transmission request, the controller may further send the configuration information (referred to as configuration information) to the optical receiving device, where the configuration information indicates the optical receiving device to receive the first data in the first slot based on the first amplitude compensation coefficient of the first optical channel in the optical interconnection network. It should be noted that the first amplitude compensation coefficient is an amplitude compensation coefficient corresponding to the first optical channel, and an actual value of the first amplitude compensation coefficient configured in the optical transmitting device may be the same as or different from an actual value of the first amplitude compensation coefficient configured in the optical receiving device. The optical receiving device may recover, in the first slot based on the first amplitude compensation coefficient according to an indication of the configuration information, the first data from the first optical signal that is output by the first optical channel.

Optionally, when the optical transmitting device has a requirement for sending data (referred to as first data) to the optical receiving device in a slot (referred to as a first slot), the optical transmitting device sends the data transmission request to the controller. The data transmission request indicates that the optical transmitting device has the requirement for sending the first data to the optical receiving device in the first slot. After receiving the data transmission request, the controller may determine the first optical channel between the optical transmitting device and the optical receiving device, and then send the configuration information (referred to as configuration information) to the optical receiving device based on the data transmission request. The configuration information indicates the optical receiving device to receive the first data in the first slot based on the first amplitude compensation coefficient of the first optical channel in the optical interconnection network. The optical transmitting device carries the first data on the first optical signal in the first slot, and then inputs the first optical signal into the first optical channel. The optical receiving device recovers, in the first slot based on the first amplitude compensation coefficient according to an indication of the configuration information, the first data from the first optical signal that is output by the first optical channel.

The controller may send the configuration information to the optical receiving device before the first slot. This helps the optical receiving device quickly complete configuration of the first amplitude compensation coefficient when the first slot arrives, and helps reduce a link establishment delay (for example, an amplitude compensation delay) of the optical receiving device, and improve data transmission efficiency of optical communication. Even if the optical receiving device still adjusts the first amplitude compensation coefficient by receiving the preamble, a delay in searching for an optimal first amplitude compensation coefficient near the first amplitude compensation coefficient is shorter. Therefore, this still helps reduce a delay in configuring the first amplitude compensation coefficient by the optical receiving device, reduce overheads of the preamble, and then improve data transmission efficiency of optical communication.

Optionally, that the optical receiving device recovers, based on the first amplitude compensation coefficient, the first data from the first optical signal that is output by the first optical channel may include: The optical transmitting device converts the first optical signal into a first electrical signal, performs amplitude compensation on the first electrical signal based on the first amplitude compensation coefficient, and then converts the first electrical signal on which amplitude compensation is performed into the first optical signal.

"Performing amplitude compensation on a signal" mentioned in this application may include "adjusting an amplitude of the signal".

According to a second aspect, this application provides a system. The system may be an optical network. The system may include a plurality of optical communication devices, an optical interconnection network, and a controller. An optical communication device that has at least a function of sending an optical signal in the plurality of optical communication devices or an optical module (or an optical interface) in the optical communication device is referred to as an optical transmitting device, and an optical communication device that has at least a function of receiving an optical signal in the plurality of optical communication devices or an optical module in the optical communication device is referred to as an optical receiving device. The optical interconnection network is configured to provide an optical channel (or referred to as an optical link or an optical path) between different optical communication devices. The optical channel is used to transmit an optical signal. For example, the optical channel includes or passes through one or more optical fibers. In this application, an optical channel that is in the optical interconnection network and that is used to transmit, to the optical receiving device in a first slot, an optical signal sent by the optical transmitting device is referred to as a first optical channel.

The system may transmit data in a TDMA manner. After the system allocates a slot for data or data transmission, the optical transmitting device is configured to send the data in the slot, the optical interconnection network is configured to provide an optical channel between the optical transmitting device and the optical receiving device in the slot, and the optical receiving device is configured to receive the data in the slot. A same optical receiving device may be configured to receive data from different optical transmitting devices in a time division manner.

The optical transmitting device is configured to perform the method performed by the optical transmitting device in the first aspect, the optical receiving device is configured to perform the method performed by the optical receiving device in the first aspect, and the controller is configured to perform the method performed by the controller in the first aspect.

Optionally, the optical transmitting device is configured to send a data transmission request to the controller, where the data transmission request indicates that the optical transmitting device has a requirement for sending first data to the optical receiving device in a first slot. The controller is configured to send configuration information to the optical transmitting device based on the data transmission request, where the configuration information indicates the optical transmitting device to send the first data in the first slot based on a first amplitude compensation coefficient of a first optical channel in an optical interconnection network, and the first optical channel is used to transmit, to the optical receiving device in the first slot, an optical signal sent by the optical transmitting device. The optical transmitting device is configured to carry the first data on a first optical signal in the first slot based on the first amplitude compensation coefficient according to an indication of the configuration information, and then input the first optical signal on which amplitude compensation is performed into the first optical channel. The optical receiving device is configured to recover, in the first slot, the first data from the first optical signal that is output by the first optical channel.

Optionally, the controller may be configured to determine an identifier of the first optical channel based on the data transmission request, and then determine the first amplitude compensation coefficient based on the identifier of the first optical channel. Correspondingly, the configuration information may include the first amplitude compensation coefficient.

Optionally, after determining the identifier of the first optical channel, the controller may be configured to carry the identifier of the first optical channel on the configuration information. After receiving the configuration information, the optical transmitting device may be configured to determine the first amplitude compensation coefficient based on the identifier of the first optical channel. Correspondingly, the configuration information may not include the first amplitude compensation coefficient. This helps reduce a length of control information, and save transmission resources of a control channel.

For ease of description, in this application, an apparatus configured to determine the first amplitude compensation coefficient based on the identifier of the first optical channel is referred to as a determining apparatus, and the determining apparatus may be the controller, the optical transmitting device, or another device.

For a manner in which the determining apparatus determines the first amplitude compensation coefficient based on the identifier of the first optical channel, refer to related descriptions in the first aspect. For example, the determining apparatus may obtain amplitude compensation information, where the amplitude compensation information indicates a correspondence between an identifier of an optical channel in the optical interconnection network and an amplitude compensation coefficient. After determining the identifier of the first optical channel, the determining apparatus may obtain, from the amplitude compensation information, an amplitude compensation coefficient (that is, the first amplitude compensation coefficient) corresponding to the identifier of the first optical channel. For meanings of the amplitude compensation information and the first amplitude compensation coefficient, refer to related descriptions in the first aspect.

Optionally, after receiving the data transmission request, the controller may further send the configuration information (referred to as configuration information) to the optical receiving device, where the configuration information indicates the optical receiving device to receive the first data in the first slot based on the first amplitude compensation coefficient of the first optical channel in the optical interconnection network. It should be noted that the first amplitude compensation coefficient is an amplitude compensation coefficient corresponding to the first optical channel, and an actual value of the first amplitude compensation coefficient configured in the optical transmitting device may be the same as or different from an actual value of the first amplitude compensation coefficient configured in the optical receiving device. The optical receiving device may recover, in the first slot based on the first amplitude compensation coefficient according to an indication of the configuration information, the first data from the first optical signal that is output by the first optical channel.

Optionally, when the optical transmitting device has a requirement for sending data (referred to as first data) to the optical receiving device in a slot (referred to as a first slot), the optical transmitting device is configured to send the data transmission request to the controller. The data transmission request indicates that the optical transmitting device has the requirement for sending the first data to the optical receiving device in the first slot. After receiving the data transmission request, the controller may be configured to determine the first optical channel between the optical transmitting device and the optical receiving device, and then send the configuration information (referred to as configuration information) to the optical receiving device based on the data transmission request. The configuration information indicates the optical receiving device to receive the first data in the first slot based on the first amplitude compensation coefficient of the first optical channel in the optical interconnection network. The optical transmitting device is configured to carry the first data on the first optical signal in the first slot, and then input the first optical signal into the first optical channel. The optical receiving device is configured to recover, in the first slot based on the first amplitude compensation coefficient according to an indication of the configuration information, the first data from the first optical signal that is output by the first optical channel.

The controller may send the configuration information to the optical receiving device before the first slot. This helps the optical receiving device quickly complete configuration of the first amplitude compensation coefficient when the first slot arrives, and helps reduce a link establishment delay (for example, an amplitude compensation delay) of the optical receiving device, and improve data transmission efficiency of optical communication. Even if the optical receiving device still adjusts the first amplitude compensation coefficient by receiving the preamble, a delay in searching for an optimal first amplitude compensation coefficient near the first amplitude compensation coefficient is shorter. Therefore, this still helps reduce a delay in configuring the first amplitude compensation coefficient by the optical receiving device, reduce overheads of the preamble, and then improve data transmission efficiency of optical communication.

Optionally, in a process of recovering, based on the first amplitude compensation coefficient, the first data from the first optical signal that is output by the first optical channel, the optical receiving device may be configured to convert the first optical signal into a first electrical signal, perform amplitude compensation on the first electrical signal based on the first amplitude compensation coefficient, and then convert the first electrical signal on which amplitude compensation is performed into the first optical signal.

For technical effects that can be achieved by the system provided in the second aspect, refer to the technical effects achieved by the corresponding method example provided in the first aspect. Details are not described herein again.

According to a third aspect, this application provides a method. The method may be applied to a controller, and the controller may be configured to perform the method performed by the controller in the first aspect.

Optionally, the controller may receive a data transmission request from an optical transmitting device, where the data transmission request indicates that the optical transmitting device has a requirement for sending a first optical signal to an optical receiving device in a first slot. Then, the controller may send configuration information to the optical transmitting device based on the data transmission request, where the configuration information indicates the optical transmitting device to send the first data in the first slot based on a first amplitude compensation coefficient of a first optical channel in an optical interconnection network. Alternatively, the controller may send configuration information to the optical receiving device based on the data transmission request, where the configuration information indicates the optical receiving device to receive the first data in the first slot based on a first amplitude compensation coefficient of a first optical channel in an optical interconnection network. Alternatively, the controller may send first configuration information to the optical transmitting device based on the data transmission request, where the first configuration information indicates the optical transmitting device to send the first data in the first slot based on a first transmitting-end amplitude compensation coefficient of the first optical channel in the optical interconnection network; and send second configuration information to the optical receiving device, where the second configuration information indicates the optical receiving device to receive the first data in the first slot based on a first receiving-end amplitude compensation coefficient of the first optical channel. The first optical channel is used to transmit, to the optical receiving device in the first slot, an optical signal sent by the optical transmitting device.

Optionally, the first amplitude compensation coefficient is an amplitude compensation coefficient that corresponds to an identifier of the first optical channel and that is obtained from amplitude compensation information, and the amplitude compensation information indicates a correspondence between an identifier of an optical channel in the optical interconnection network and an amplitude compensation coefficient.

Optionally, the amplitude compensation information is determined based on an amplitude measurement result of an optical signal that is output by the optical channel in the optical interconnection network in a second slot, and the second slot includes one or more slots before the first slot.

Optionally, the amplitude compensation coefficient that corresponds to the identifier of the first optical channel and that is indicated by the amplitude compensation information is an amplitude compensation coefficient in a plurality of amplitude compensation coefficients that matches a first amplitude measurement result, and the first amplitude measurement result is an amplitude measurement result of an optical signal that is output by the first optical channel in the second slot.

Optionally, the identifier of the first optical channel is used to determine the first optical channel from a plurality of optical channels in the optical interconnection network, and at least two optical channels in the plurality of optical channels are separately used to transmit, to the optical receiving device, the optical signal sent by the optical transmitting device.

Optionally, the first amplitude compensation coefficient indicates a value of an amplitude or a value of an amplification factor of an amplitude.

Optionally, the optical interconnection network includes one or more optical switching devices, and the controller may further control, based on the data transmission request, the optical interconnection network to generate the first optical channel in the first slot.

For a method for determining the first transmitting-end amplitude compensation coefficient and the first receiving-end amplitude compensation coefficient, refer to the manner for determining the first amplitude compensation coefficient. Optionally, the first transmitting-end amplitude compensation coefficient and the first receiving-end amplitude compensation coefficient each indicate a value of an amplitude or a value of an amplification factor of an amplitude. The first transmitting-end amplitude compensation coefficient and the first receiving-end amplitude compensation coefficient may be the same or different. Optionally, the first transmitting-end amplitude compensation coefficient and the first receiving-end compensation coefficient each are less than the first amplitude compensation coefficient. In some examples, a sum of a value of an amplification factor indicated by the first transmitting-end amplitude compensation coefficient and a value of an amplification factor indicated by the first receiving-end compensation coefficient may be equal to a value of an amplification factor indicated by the first amplitude compensation coefficient.

For technical effects that can be achieved by the method provided in the third aspect, refer to the technical effects achieved by the foregoing corresponding system method. Details are not described herein again.

According to a fourth aspect, this application provides a controller. The controller may be configured to perform the method performed by the controller in the first aspect or the third aspect. An implementation of the controller is not limited in this application. The controller may be implemented by using software, hardware, or a combination of software and hardware.

Optionally, the controller may include a receiving module and a sending module. The receiving module is configured to receive a data transmission request from an optical transmitting device, where the data transmission request indicates that the optical transmitting device has a requirement for sending a first optical signal to an optical receiving device in a first slot. The sending module is configured to send configuration information to the optical transmitting device based on the data transmission request, where the configuration information indicates the optical transmitting device to send the first data in the first slot based on a first amplitude compensation coefficient of a first optical channel in an optical interconnection network. Alternatively, the sending module is configured to send configuration information to the optical receiving device based on the data transmission request, where the configuration information indicates the optical receiving device to receive the first data in the first slot based on a first amplitude compensation coefficient of a first optical channel in an optical interconnection network. Alternatively, the sending module is configured to send first configuration information to the optical transmitting device based on the data transmission request, where the first configuration information indicates the optical transmitting device to send the first data in the first slot based on a first transmitting-end amplitude compensation coefficient of the first optical channel in the optical interconnection network; and send second configuration information to the optical receiving device, where the second configuration information indicates the optical receiving device to receive the first data in the first slot based on a first receiving-end amplitude compensation coefficient of the first optical channel. The first optical channel is used to transmit, to the optical receiving device in the first slot, an optical signal sent by the optical transmitting device.

The first transmitting-end amplitude compensation coefficient and the first receiving-end amplitude compensation coefficient may be the same or different. Optionally, the first transmitting-end amplitude compensation coefficient and the first receiving-end compensation coefficient each are less than the first amplitude compensation coefficient. In some examples, a sum of a value of an amplification factor indicated by the first transmitting-end amplitude compensation coefficient and a value of an amplification factor indicated by the first receiving-end compensation coefficient may be equal to a value of an amplification factor indicated by the first amplitude compensation coefficient.

Optionally, the sending module is further configured to control, based on the data transmission request, the optical interconnection network to generate the first optical channel in the first slot.

Optionally, the first amplitude compensation coefficient is an amplitude compensation coefficient that corresponds to an identifier of the first optical channel and that is obtained from the amplitude compensation information, and the identifier of the first optical channel and a meaning and a determining method of the amplitude compensation information may be understood with reference to related content in the third aspect.

Optionally, the controller may include a processor and a memory. The processor is configured to execute computer instructions stored in the memory, to perform the method performed by the controller in the first aspect or the third aspect.

Division into the modules of the controller is merely an example, and is merely logical function division. There may be other division manners during actual implementation. For example, a plurality of modules may be combined or integrated into another system, or some features may be ignored or not performed.

According to a fifth aspect, this application provides a method. The method may be applied to an optical transmitting device, and the optical transmitting device may be configured to perform the method performed by the optical transmitting device in the first aspect.

Optionally, the optical transmitting device may send a data transmission request to a controller, where the data transmission request indicates that an optical transmitting device has a requirement for sending first data to an optical receiving device in a first slot. Then, the optical transmitting device may receive configuration information from the controller, where the configuration information indicates the optical transmitting device to send the first data in the first slot based on a first amplitude compensation coefficient of a first optical channel in an optical interconnection network, and the first optical channel is used to transmit, to the optical receiving device in the first slot, an optical signal sent by the optical transmitting device. Then, the optical transmitting device may carry the first data on a first optical signal in the first slot based on the first amplitude compensation coefficient according to an indication of the configuration information, and then input the first optical signal on which amplitude compensation is performed into the first optical channel.

Optionally, the first amplitude compensation coefficient is an amplitude compensation coefficient that corresponds to an identifier of the first optical channel and that is obtained from the amplitude compensation information, and the identifier of the first optical channel and a meaning and a determining method of the amplitude compensation information may be understood with reference to related content in the third aspect.

Optionally, that the optical transmitting device carries the first data on the first optical signal based on the first amplitude compensation coefficient includes: The optical transmitting device carries the first data on a first electrical signal; the optical transmitting device performs amplitude compensation on the first electrical signal based on the first amplitude compensation coefficient; and the optical transmitting device converts the first electrical signal into the first optical signal.

Optionally, the first amplitude compensation coefficient indicates a value of an amplitude or a value of an amplification factor of an amplitude.

Optionally, the optical interconnection network includes one or more optical switching devices, and the first optical channel is generated in the first slot by the optical interconnection network controlled by the controller based on the data transmission request.

For technical effects that can be achieved by the method provided in the fifth aspect, refer to the technical effects achieved by the foregoing corresponding system method. Details are not described herein again.

According to a sixth aspect, this application provides an optical transmitting device. The optical transmitting device may be configured to perform the method performed by the optical transmitting device in the first aspect or the fifth aspect. An implementation of the optical transmitting device is not limited in this application.

Optionally, the optical transmitting device may include a control module and a service module. The control module is configured to send a data transmission request to a controller, where the data transmission request indicates that the optical transmitting device has a requirement for sending first data to an optical receiving device in a first slot. The control module is further configured to receive configuration information from the controller, where the configuration information indicates the optical transmitting device to send the first data in the first slot based on a first amplitude compensation coefficient of a first optical channel in an optical interconnection network, and the first optical channel is used to transmit, to the optical receiving device in the first slot, an optical signal sent by the optical transmitting device. The control module is further configured to configure the first amplitude compensation coefficient for the service module in the first slot based on an indication of the configuration information. The service module is configured to carry the first data on a first optical signal in the first slot based on the first amplitude compensation coefficient, and then input the first optical signal on which amplitude compensation is performed into the first optical channel.

Optionally, the first amplitude compensation coefficient is an amplitude compensation coefficient that corresponds to an identifier of the first optical channel and that is obtained from the amplitude compensation information, and the identifier of the first optical channel and a meaning and a determining method of the amplitude compensation information may be understood with reference to related content in the third aspect.

Optionally, that the service module carries the first data on the first optical signal based on the first amplitude compensation coefficient includes: carrying the first data on a first electrical signal; performing amplitude compensation on the first electrical signal based on the first amplitude compensation coefficient; and converting the first electrical signal into the first optical signal.

Optionally, the first amplitude compensation coefficient indicates a value of an amplitude or a value of an amplification factor of an amplitude.

Optionally, the optical interconnection network includes one or more optical switching devices, and the first optical channel is generated in the first slot by the optical interconnection network controlled by the controller based on the data transmission request.

Division into the modules of the optical transmitting device is merely an example, and is merely logical function division. There may be other division manners during actual implementation. For example, a plurality of modules may be combined or integrated into another system, or some features may be ignored or not performed. For example, the control module may be implemented by reading computer instructions in a memory by a processor, and the service module may include an encoder, an amplifier, and an optical transmitter.

According to a seventh aspect, this application provides a transmitting device. The transmitting device includes a control module and a service module, the service module is configured to connect to an optical module, and the optical module is configured to convert an input electrical signal into an optical signal. The control module is configured to send a data transmission request to a controller, where the data transmission request indicates that the optical transmitting device has a requirement for sending first data to an optical receiving device in a first slot. The control module is further configured to receive configuration information from the controller, where the configuration information indicates the optical transmitting device to send the first data in the first slot based on a first amplitude compensation coefficient of a first optical channel in an optical interconnection network, and the first optical channel is used to transmit, to the optical receiving device in the first slot, an optical signal sent by the optical transmitting device. The control module is further configured to configure the first amplitude compensation coefficient for the service module in the first slot based on an indication of the configuration information. The service module is configured to carry the first data on a first electrical signal in the first slot based on the first amplitude compensation coefficient, and then input the first electrical signal on which amplitude compensation is performed into the optical module.

Optionally, the first amplitude compensation coefficient is an amplitude compensation coefficient that corresponds to an identifier of the first optical channel and that is obtained from the amplitude compensation information, and the identifier of the first optical channel and a meaning and a determining method of the amplitude compensation information may be understood with reference to related content in the third aspect.

Optionally, in a process of carrying the first data on the first electrical signal in the first slot based on the first amplitude compensation coefficient, the service module is specifically configured to carry the first data on the first electrical signal; and perform amplitude compensation on the first electrical signal based on the first amplitude compensation coefficient.

Division into the modules of the transmitting device is merely an example, and is merely logical function division. There may be other division manners during actual implementation. For example, a plurality of modules may be combined or integrated into another system, or some features may be ignored or not performed.

In some examples, it may be considered that the optical transmitting device described in the sixth aspect includes the transmitting device and the optical module provided in the seventh aspect.

According to an eighth aspect, this application provides a method. The method may be applied to an optical receiving device, and the optical receiving device may be configured to perform the method performed by the optical receiving device in the first aspect.

Optionally, the optical receiving device may receive configuration information from a controller, where the configuration information is sent by the controller to an optical receiving device based on a data transmission request from an optical transmitting device, the data transmission request indicates that the optical transmitting device has a requirement for sending first data to the optical receiving device in a first slot, the configuration information indicates the optical receiving device to receive the first data in the first slot based on a first amplitude compensation coefficient of a first optical channel in an optical interconnection network, and the first optical channel is used to transmit, to the optical receiving device in the first slot, an optical signal sent by the optical transmitting device. Then, the optical receiving device may recover, in the first slot based on the first amplitude compensation coefficient according to an indication of the configuration information, the first data from a first optical signal that is output by the first optical channel, where the first optical signal is an optical signal that is input by the optical transmitting device to the first optical channel in the first slot and that carries the first data.

Optionally, the first amplitude compensation coefficient is an amplitude compensation coefficient that corresponds to an identifier of the first optical channel and that is obtained from the amplitude compensation information, and the identifier of the first optical channel and a meaning and a determining method of the amplitude compensation information may be understood with reference to related content in the third aspect.

Optionally, that the optical receiving device recovers, based on the first amplitude compensation coefficient, the first data from the first optical signal that is output by the first optical channel includes: The optical receiving device converts the first optical signal into a first electrical signal, performs amplitude compensation on the first electrical signal based on the first amplitude compensation coefficient, and then recovers the first data from the first electrical signal on which amplitude compensation is performed.

Optionally, the first amplitude compensation coefficient indicates a value of an amplitude or a value of an amplification factor of an amplitude.

Optionally, the optical interconnection network includes one or more optical switching devices, and the first optical channel is generated in the first slot by the optical interconnection network controlled by the controller based on the data transmission request.

According to a ninth aspect, this application provides an optical receiving device. The optical receiving device may be configured to perform the method performed by the optical receiving device in the first aspect or the eighth aspect. An implementation of the optical receiving device is not limited in this application.

Optionally, the optical receiving device includes a control module and a service module. The control module is configured to receive configuration information from a controller, where the configuration information is sent by the controller based on a data transmission request, the data transmission request indicates that an optical transmitting device has a requirement for sending first data to the optical receiving device in a first slot, the configuration information indicates the optical receiving device to receive the first data in the first slot based on a first amplitude compensation coefficient of a first optical channel in an optical interconnection network, and the first optical channel is used to transmit, to the optical receiving device in the first slot, an optical signal sent by the optical transmitting device. The control module is further configured to configure the first amplitude compensation coefficient for the service module in the first slot based on an indication of the configuration information. The service module is configured to recover, in the first slot based on the first amplitude compensation coefficient, the first data from a first optical signal that is output by the first optical channel, where the first optical signal is an optical signal that is input by the optical transmitting device to the first optical channel in the first slot and that carries the first data.

Optionally, the first amplitude compensation coefficient is an amplitude compensation coefficient that corresponds to an identifier of the first optical channel and that is obtained from the amplitude compensation information, and the identifier of the first optical channel and a meaning and a determining method of the amplitude compensation information may be understood with reference to related content in the third aspect.

Optionally, that the service module recovers, based on the first amplitude compensation coefficient, the first data from the first optical signal that is output by the first optical channel includes: converting the first optical signal into a first electrical signal, performing amplitude compensation on the first electrical signal based on the first amplitude compensation coefficient, and then recovering the first data from the first electrical signal on which amplitude compensation is performed.

Optionally, the first amplitude compensation coefficient indicates a value of an amplitude or a value of an amplification factor of an amplitude.

Optionally, the optical interconnection network includes one or more optical switching devices, and the first optical channel is generated in the first slot by the optical interconnection network controlled by the controller based on the data transmission request.

Division into the modules of the optical receiving device is merely an example, and is merely logical function division. There may be other division manners during actual implementation. For example, a plurality of modules may be combined or integrated into another system, or some features may be ignored or not performed. For example, the control module may be implemented by reading computer instructions in a memory by a processor, and the service module may include a decoder, an amplifier, and an optical receiver.

According to a tenth aspect, this application provides a receiving device. The receiving device includes a control module and a service module, the service module is configured to connect to an optical module, and the optical module is configured to convert an input optical signal into an electrical signal. The control module is configured to receive configuration information from a controller, where the configuration information is sent by the controller based on a data transmission request, the data transmission request indicates that an optical transmitting device has a requirement for sending first data to the optical receiving device in a first slot, the configuration information indicates the optical receiving device to receive the first data in the first slot based on a first amplitude compensation coefficient of a first optical channel in an optical interconnection network, and the first optical channel is used to transmit, to the optical receiving device in the first slot, an optical signal sent by the optical transmitting device. The control module is further configured to configure the first amplitude compensation coefficient for the service module in the first slot based on an indication of the configuration information. The service module is configured to receive a first electrical signal from the optical module in the first slot, where the first electrical signal is obtained by the optical module in the first slot by converting a first optical signal that is output from the first optical channel. The service module is configured to recover the first data from the first electrical signal based on the first amplitude compensation coefficient.

Optionally, the first amplitude compensation coefficient is an amplitude compensation coefficient that corresponds to an identifier of the first optical channel and that is obtained from the amplitude compensation information, and the identifier of the first optical channel and a meaning and a determining method of the amplitude compensation information may be understood with reference to related content in the third aspect.

Optionally, in a process of recovering the first data from the first electrical signal based on the first amplitude compensation coefficient, the service module is configured to perform amplitude compensation on the first electrical signal based on the first amplitude compensation coefficient, and recover the first data from the first electrical signal on which amplitude compensation is performed.

Optionally, the first amplitude compensation coefficient indicates a value of an amplitude or a value of an amplification factor of an amplitude.

Optionally, the optical interconnection network includes one or more optical switching devices, and the first optical channel is generated in the first slot by the optical interconnection network controlled by the controller based on the data transmission request.

Division into the modules of the transmitting device is merely an example, and is merely logical function division. There may be other division manners during actual implementation. For example, a plurality of modules may be combined or integrated into another system, or some features may be ignored or not performed.

In some examples, it may be considered that the optical receiving device described in the ninth aspect includes the receiving device and the optical module provided in the tenth aspect.

According to an eleventh aspect, this application provides a computer-readable storage medium. The computer-readable storage medium includes instructions. When the instructions are run on a computer device, the computer device is enabled to perform the method performed by any one of the foregoing apparatuses, for example, perform the method in the third aspect, the fifth aspect, or the eighth aspect, or implement a function of the control module in the sixth aspect, the seventh aspect, the ninth aspect, or the tenth aspect.

According to a twelfth aspect, a computer program product is provided. When the computer program product runs on a computer device, the computer device is enabled to perform the method performed by any one of the foregoing apparatuses, for example, perform the method in the third aspect, the fifth aspect, or the eighth aspect, or implement a function of the control module in the sixth aspect, the seventh aspect, the ninth aspect, or the tenth aspect.

The apparatuses provided in examples of this application may be configured to perform the foregoing corresponding example methods. Therefore, for technical effects that can be achieved by the apparatus examples in this application, refer to the technical effects achieved by the foregoing corresponding method examples. Details are not described herein again.

In some scenarios, the amplitude or the signal amplitude mentioned in this application may be replaced with signal strength or optical power as required. A form of the first data is not limited in this application. For example, the first data may be data carried in an electrical signal. In a process in which the optical transmitting device carries the first data on an optical signal, the optical transmitting device converts the electrical signal carrying the first data into the optical signal. A transmission mode of the first optical signal is not limited in this application. For example, the first optical signal may be a signal in an optical burst mode (or referred to as an optical burst signal).

### BRIEF DESCRIPTION OF DRAWINGS

FIG. 1 illustratively shows a structure of a system according to this application;
FIG. 2 is a diagram illustrating a possible slot in a communication method in an optical network;
FIG. 3 illustratively shows another possible structure of a system and a possible procedure of a method performed by the system according to this application;
FIG. 4-1 illustratively shows a possible structure of an optical transmitting device and a possible detailed procedure of S303 in FIG. 3 according to this application;
FIG. 4-2 illustratively shows a possible structure of an optical receiving device and a possible detailed procedure of S304 in FIG. 3 according to this application;
FIG. 4-3 is a diagram of a possible slot in a method procedure according to this application;
FIG. 5 illustratively shows another possible procedure of a method performed by a system according to this application;
FIG. 6-1 illustratively shows another possible structure of an optical transmitting device and a possible detailed procedure of S503 in FIG. 5 according to this application;
FIG. 6-2 illustratively shows another possible structure of an optical receiving device and a possible detailed procedure of S504 in FIG. 5 according to this application;
FIG. 6-3 is a diagram of another possible slot in a method procedure according to this application;
FIG. 7 illustratively shows a possible structure of a controller according to this application; and
FIG. 8 illustratively shows a possible structure of an optical communication device according to this application.

### DESCRIPTION OF EMBODIMENTS

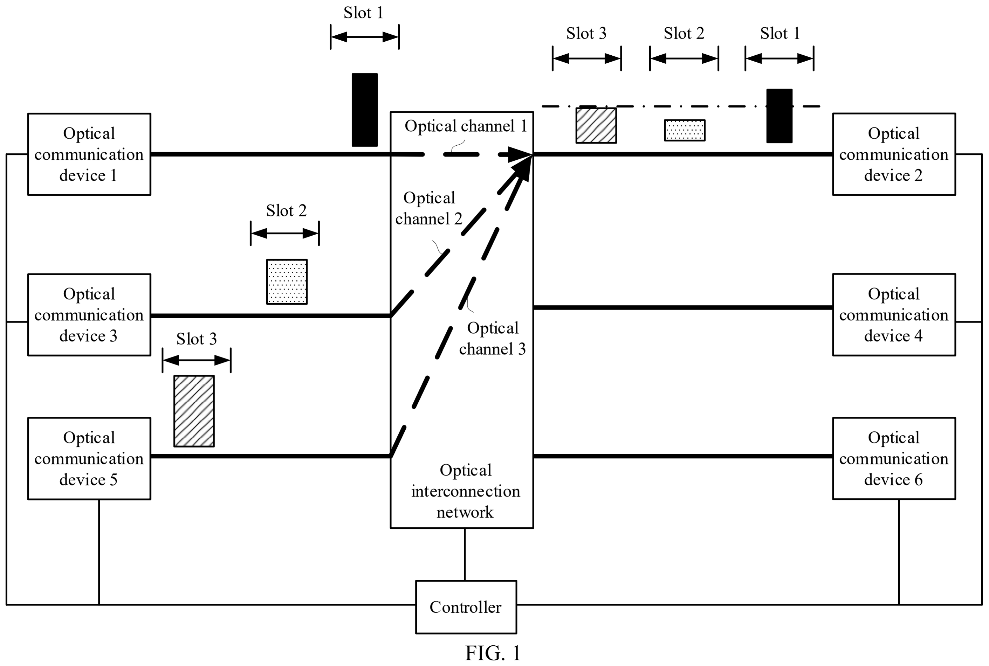

This application provides a system. The system may be an optical network shown in FIG. 1. Refer to FIG. 1. The system may include an optical interconnection network, a controller, and an optical communication device 1 to an optical communication device 6. The system may include more or fewer devices than those shown in FIG. 1, for example, may include more or fewer optical communication devices.

The optical communication device may be an optical transmitting device, and the optical transmitting device is configured to send an optical signal carrying data to the optical interconnection network. Alternatively, the optical communication device may be an optical receiving device, and the optical receiving device is configured to recover data from a received optical signal. The optical communication device may be not only an optical transmitting device but also an optical receiving device. A type of the optical communication device is not limited in this application. For example, the optical communication device may be an optical line terminal (optical line terminal, OLT), an optical network unit (optical network unit, ONU), a router, a switch, a server, an optical transport network (optical transport network, OTN) transport device, or a computer device.

The optical communication device is connected to the optical interconnection network, the optical interconnection network is configured to provide an optical channel between different optical communication devices, and the optical channel is used to transmit an optical signal. For example, refer to FIG. 1. The optical interconnection network may provide an optical channel 1 to an optical channel 3. The optical channel 1 is configured to transmit, to the optical communication device 2, an optical signal sent by the optical communication device 1, the optical channel 2 is configured to transmit, to the optical communication device 2, an optical signal sent by the optical communication device 3, and the optical channel 3 is configured to transmit, to the optical communication device 2, an optical signal sent by the optical communication device 5. The optical interconnection network may provide more or fewer optical channels.

The system may be a multipoint-to-multipoint communication system. For example, the optical communication device 1 may further send data to the optical communication device 4 and/or the optical communication device 6 through the optical interconnection network. The system may be a point-to-multipoint communication system. For example, the system may not include the optical communication device 4 or the optical communication device 6.

The optical communication device may include one or more ports, and the optical communication device is configured to send an optical signal or receive an optical signal through the port. The optical channel is used to connect two different ports. When the optical communication device includes a plurality of ports, the optical communication device may be connected to a plurality of optical channels through the plurality of ports.

The optical channel may include or pass through one or more optical fibers. Optionally, the optical interconnection network may further include an optical device other than an optical fiber. For example, the optical interconnection network may include one or more passive optical devices such as passive optical splitters, and/or include one or more optical switching devices. The optical switching device is configured to switch an optical signal. A quantity and types of optical switching devices are not limited in this application. For example, the optical switching device supports all-optical switching. All-optical switching means that an optical signal received by an optical input end is directly switched to any optical output end of the optical switching device without performing any optical-to-electrical conversion or electrical-to-optical conversion.

The controller may be separately connected to the optical communication device 1 to the optical communication device 6, may be further connected to the optical interconnection network, and performs a control plane service by exchanging control information with a connected device. In FIG. 1, a relatively thick connection line represents a data transmission channel (or referred to as an in-band channel), and a relatively thin connection line represents a control information transmission channel. In this application, an example in which the control information transmission channel is an out-of-band channel is used.

An application scenario of the system is not limited in this application. For example, the optical network may be applied to a data center network (data1 center network, DCN), a metropolitan area network, a passive optical network (passive optical network, PON), an OTN, and the like. This is not specifically limited. A deployment manner of the system is not limited in this application. For example, the optical network may be deployed in a single cabinet or a plurality of cabinets in a data center.

The system may transmit data in a TDMA manner. Optionally, the data may be burst data. After the system allocates a slot for data or data transmission, the optical transmitting device sends the data in the slot, the optical interconnection network provides an optical channel between the optical transmitting device and the optical receiving device in the slot, and the optical receiving device receives the data in the slot. A same optical receiving device may receive data from different optical transmitting devices in a time division manner. For example, refer to FIG. 1. The optical communication device 1 may input an optical signal 1 (referring to a rectangle filled in black) to an optical channel 1 in a slot 1, and correspondingly, the optical communication device 2 may receive the optical signal 1 from the optical channel 1 in the slot 1. The optical communication device 3 may input an optical signal 2 (referring to a rectangle filled with dots) to an optical channel 2 in a slot 2, and correspondingly, the optical communication device 2 may receive the optical signal 2 from the optical channel 2 in the slot 2. The optical communication device 5 may input an optical signal 3 (referring to a rectangle filled with slashes) to an optical channel 3 in a slot 3, and correspondingly, the optical communication device 2 may receive the optical signal 3 from the optical channel 3 in the slot 3.

The optical receiving device performs data recovery on an optical signal in a process of receiving the optical signal. In FIG. 1, a height of a rectangle represents an amplitude of an optical signal. Refer to FIG. 1. Usually, there is a relatively large amplitude difference between optical signals received by the optical receiving device from different optical channels. As a result, there is a relatively large difference (referred to as an amplitude error) between amplitudes of all or some optical signals received by the optical receiving device and a target amplitude. This increases a bit error rate of optical communication. The target amplitude may be an amplitude that is of an optical signal and that is required by the optical receiving device to successfully recover data. Optionally, the amplitude error may be alternatively measured by using a difference between an amplitude of an electrical signal converted from the received optical signal and an amplitude that is of an electrical signal and that is required by the optical receiving device to successfully recover data. In FIG. 1, a horizontal dashed line represents the target amplitude. Refer to FIG. 1. In a plurality of optical signals received by the optical communication device 2, an amplitude of the optical signal 1 is larger than the target amplitude, an amplitude of the optical signal 2 is far smaller than the target amplitude, and an amplitude of the optical signal 3 is close to the target amplitude.

In a process of recovering data from an optical signal carrying the data, the optical receiving device may adjust an amplitude of the optical signal based on an amplitude compensation coefficient, and then recover the data from the optical signal on which amplitude compensation is performed. Because amplitudes of different optical signals differ greatly, amplitude compensation coefficients required for recovering different optical signals are usually different.

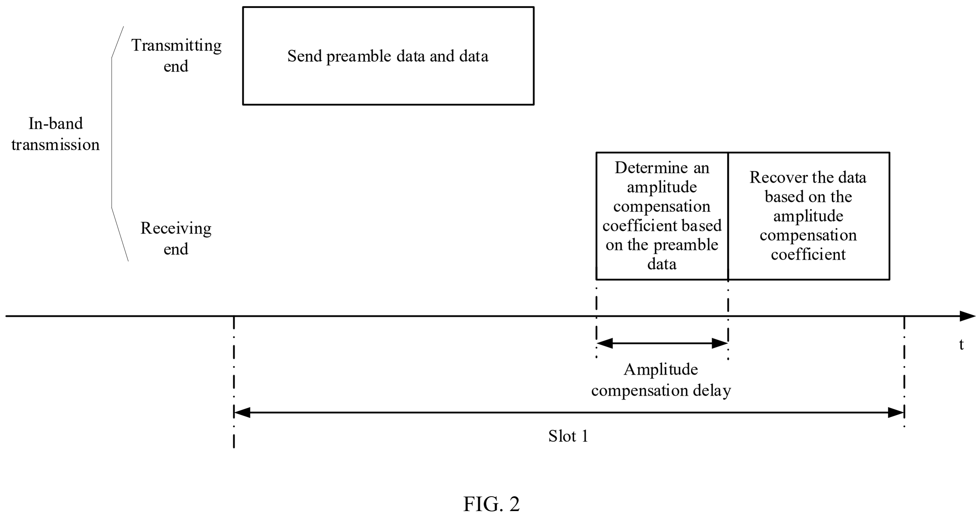

To determine an amplitude compensation coefficient required for recovering an optical signal, before occupying a slot to send data (or referred to as a payload) to an optical receiving device, an optical transmitting device may occupy the slot to additionally send a preamble to the optical receiving device. The preamble is data pre-learned by the optical receiving device. The optical receiving device configures the amplitude compensation coefficient by receiving the preamble, and then receives the data based on the configured amplitude compensation coefficient. An example in which the optical communication device 2 receives the optical signal 1 is used. Refer to FIG. 2. The optical communication device 2 determines and configures an amplitude compensation coefficient in the slot 1 based on a preamble, and then recovers a payload based on the configured amplitude compensation coefficient.

Because a delay in determining, by the optical receiving device, a first amplitude compensation coefficient based on the preamble is relatively long, and preamble overheads are relatively large, data transmission efficiency of optical communication is reduced.

For different optical channels, amplitudes of input optical signals, distances of optical links, and channel conditions usually differ greatly. However, when another impact factor is not considered, amplitudes of optical signals received by the optical communication device 2 in different slots through a same optical channel are the same. Based on the foregoing consideration, this application provides a communication method applied to the foregoing system. The system may compensate, based on a first amplitude compensation coefficient of an optical channel, for an amplitude error existing when an optical signal arrives at an optical receiving device through the optical channel, thereby helping reduce a bit error rate. In addition, because impact of a same optical channel on an amplitude of an optical signal is usually fixed, compensating for the amplitude error by the system on an optical transmitting device side and/or an optical receiving device side based on the first amplitude compensation coefficient of the optical channel helps quickly complete configuration of the first amplitude compensation coefficient when a first slot arrives, thereby improving data transmission efficiency of optical communication. The following describes a possible procedure of the communication method with reference to the accompanying drawings.

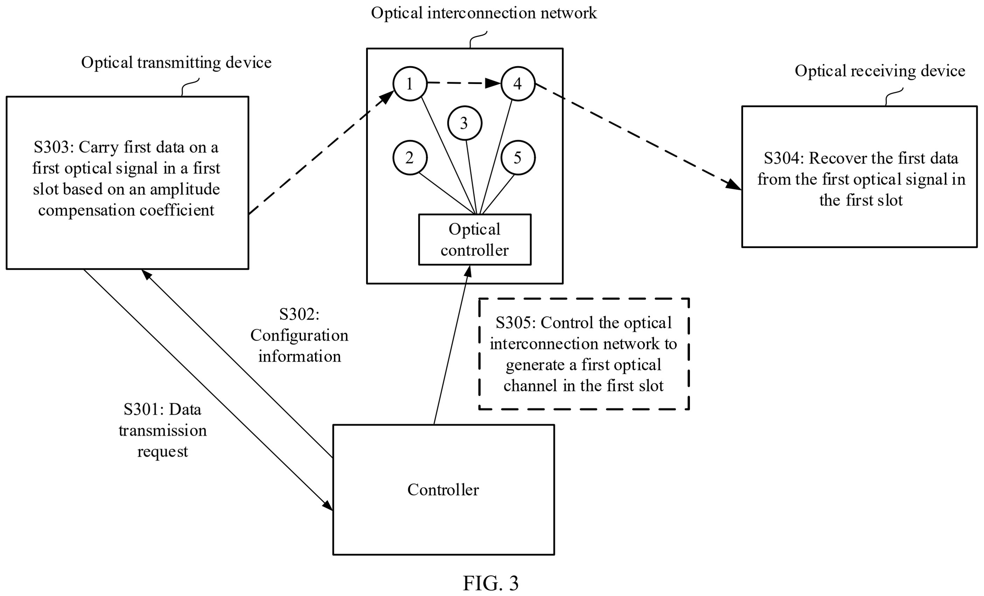

FIG. 3 illustratively shows another possible structure of a system according to this application. Refer to FIG. 3. An optical transmitting device may be understood with reference to the optical communication device 1, the optical communication device 3, or the optical communication device 5 shown in FIG. 1, an optical receiving device may be understood with reference to the optical communication device 2 shown in FIG. 1, and a controller and an optical interconnection network may be respectively understood with reference to the controller and the optical interconnection network shown in FIG. 1.

A circle shown in FIG. 3 may represent an optical switching device in the optical interconnection network. In FIG. 3, an example in which the optical interconnection network includes an optical switching device 1 to an optical switching device 5 is used. The optical interconnection network may include more or fewer optical switching devices. For example, the optical interconnection network may not include an optical switching device.

In FIG. 3, a solid line with an arrow represents an out-of-band channel, and the out-of-band channel is used to transmit out-of-band service information in a form of an optical signal or an electrical signal. In FIG. 3, a dashed line with an arrow represents an in-band channel, and the in-band channel is used to transmit user data (data for short) in a form of an optical signal. In this application, an optical channel that is in the optical interconnection network and that is used to transmit, to an optical receiving device in a first slot, an optical signal sent by an optical transmitting device is referred to as a first optical channel. Refer to FIG. 3. An optical signal that is input by the optical transmitting device to the first optical channel may be forwarded to the optical receiving device sequentially through the optical switching device 1 and the optical switching device 4. A quantity of optical switching devices that are included in the first optical channel or through which the first optical channel passes is not limited in this application. Optionally, the first optical channel may not include or not pass through any optical switching device.

FIG. 3 further illustratively shows a possible procedure of a communication method according to this application. In the method shown in FIG. 3, a system compensates for an amplitude error on an optical transmitting device side based on a first amplitude compensation coefficient of an optical channel. Refer to FIG. 3. The communication method may include S301 to S304.

S301: An optical transmitting device sends a data transmission request to a controller, and correspondingly, the controller may receive the data transmission request from the optical transmitting device.

When the optical transmitting device has a requirement for sending data (referred to as first data) to an optical receiving device in a slot (referred to as a first slot), the optical transmitting device may send the data transmission request to the controller. The data transmission request indicates that the optical transmitting device has the requirement for sending the first data to the optical receiving device in the first slot. Correspondingly, the controller may be configured to receive the data transmission request.

Optionally, the data transmission request may carry information about the first slot, and the information about the first slot includes, for example, at least two of a start moment of the first slot, an end moment of the first slot, and duration of the first slot. Alternatively, optionally, the data transmission request may not include information about the first slot, and the controller may determine the first slot based on the data transmission request. For example, the controller may use an n^{th} slot after reception of the data transmission request as the first slot, where n is a positive integer. For example, the controller may allocate the first slot for the data transmission request, and then send information about the first slot to the optical transmitting device, to indicate the optical transmitting device to send a first optical signal in the first slot.

The data transmission request may include address information of the optical transmitting device and address information of the optical receiving device. The address information of the optical transmitting device may include a media access control address (media access control address, MAC) of the optical transmitting device. Similarly, the address information of the optical receiving device may include a MAC of the optical receiving device.

Optionally, the optical transmitting device includes one or more transmit ports, and the transmit port is configured to input, into an optical fiber in an optical interconnection network, an optical signal sent by the optical transmitting device. Optionally, the address information of the optical transmitting device may include address information of a transmit port (referred to as a first port). The address information of the first port may include the MAC of the optical transmitting device and an identifier of the first port. The identifier of the first port is used to determine the first port from a plurality of ports of the optical transmitting device.

Optionally, the optical receiving device includes one or more receive ports, and the receive port is configured to input, into the optical receiving device, an optical signal that is output from the optical fiber in the optical interconnection network. Optionally, the address information of the optical transmitting device may include address information of a receive port (referred to as a second port). The address information of the second port may include the MAC of the optical receiving device and an identifier of the second port. The identifier of the second port is used to determine the second port from a plurality of ports of the optical receiving device.

When the data transmission request includes the address information of the first port and the address information of the second port, the data transmission request indicates that the first port has a requirement for sending the first optical signal to the second port in the first slot. Correspondingly, a first optical channel is used to transmit, to the second port, the optical signal sent by the first port.

S302: The controller sends configuration information to the optical transmitting device based on the data transmission request, and correspondingly, the optical transmitting device may receive the configuration information.

After receiving the data transmission request, the controller may determine the first optical channel between the optical transmitting device and the optical receiving device, and then send the configuration information to the optical transmitting device based on the data transmission request. The configuration information indicates the optical transmitting device to send the first data in the first slot based on a first amplitude compensation coefficient of the first optical channel, and the first amplitude compensation coefficient of the first optical channel may be used to compensate for impact of the first optical channel on an amplitude of an optical signal. For ease of description, the first amplitude compensation coefficient indicated by the configuration information is referred to as a first amplitude compensation coefficient below. Correspondingly, the optical transmitting device may receive the configuration information, and determine an indication of the configuration information.

Optionally, the controller may determine an identifier of the first optical channel based on the data transmission request, and then determine the first amplitude compensation coefficient based on the identifier of the first optical channel. Correspondingly, the configuration information may include the first amplitude compensation coefficient.

The first amplitude compensation coefficient may indicate a value of an amplitude (referred to as a first amplitude value) or a value of an amplification factor of an amplitude (referred to as a first amplification factor). The value indicated by the first amplitude compensation coefficient may be an absolute value or a relative value. It is assumed that the relative value indicated by the first amplitude compensation coefficient is a relative value of the value of the amplitude relative to a target value, and the target value is a determined value. A meaning of the target value is not limited in this application. For example, the target value may represent a maximum value of an amplitude compensation coefficient supported by the optical transmitting device, or the target value may represent an amplitude compensation coefficient configured by the optical transmitting device currently or by default, or the target value may be a value of a minimum amplitude variation supported by the optical transmitting device.

A specific meaning of the value of the amplitude is not limited in this application. For example, the value of the amplitude may be a value of optical power of an optical signal, a value of a voltage of a voltage signal, or a value of a current of a current signal.

Optionally, after determining the identifier of the first optical channel, the controller may carry the identifier of the first optical channel on the configuration information. After receiving the configuration information, the optical transmitting device may determine the first amplitude compensation coefficient based on the identifier of the first optical channel. Correspondingly, the configuration information may not include the first amplitude compensation coefficient. This helps reduce a length of control information, and save transmission resources of a control channel.

For ease of description, in this application, an apparatus configured to determine the first amplitude compensation coefficient based on the identifier of the first optical channel is referred to as a determining apparatus, and the determining apparatus may be the controller, the optical transmitting device, or another device.

Optionally, the determining apparatus may obtain amplitude compensation information, where the amplitude compensation information indicates a correspondence between an identifier of an optical channel in the optical interconnection network and an amplitude compensation coefficient. After determining the identifier of the first optical channel, the determining apparatus may obtain, from the amplitude compensation information, an amplitude compensation coefficient (that is, the first amplitude compensation coefficient) corresponding to the identifier of the first optical channel.

A manner in which the amplitude compensation information indicates the correspondence is not limited in this application. For example, the amplitude compensation information may be a machine learning model, and the machine learning model is used to output an amplitude compensation coefficient of a corresponding optical channel based on an input identifier of the optical channel. Alternatively, an identifier of an optical channel and an amplitude compensation coefficient of the optical channel are recorded in association in the amplitude compensation information. For example, the amplitude compensation information may be one or more key-value pairs, and the identifier of the first optical channel and the first amplitude compensation coefficient may be respectively a key and a value of a key-value pair.

Table 1 illustratively shows some key-value pairs in the amplitude compensation information. In Table 1, a first column represents an identifier of an optical channel, a second column represents an amplitude compensation coefficient of the optical channel, and an identifier and an amplitude compensation coefficient in a same row correspond to a same optical channel. For example, ID1 and M1 respectively represent an identifier and an amplitude compensation coefficient of the optical channel 1 shown in FIG. 1, ID2 and M2 respectively represent an identifier and an amplitude compensation coefficient of the optical channel 2 shown in FIG. 1, and ID3 and M3 respectively represent an identifier and an amplitude compensation coefficient of the optical channel 3 shown in FIG. 1.

**Table 1**

| | |
|---|---|
| ID1 | M1 |
| ID2 | M2 |
| ID3 | M3 |
| ... | ... |

A location for storing the amplitude compensation information is not limited in this application. For example, the amplitude compensation information may be stored in the determining apparatus, or stored in an apparatus other than the determining apparatus.

A manner of obtaining the amplitude compensation information by the determining apparatus is not limited in this application. For example, the determining apparatus may receive the amplitude compensation information from another device. Alternatively, the determining apparatus may generate the amplitude compensation information based on parameter information and/or an amplitude measurement result of the optical channel in the optical interconnection network.

The parameter information of the optical channel includes but is not limited to an amplitude of an optical signal sent by the optical transmitting device to the optical channel, a length of an optical fiber that the optical channel passes through, and/or a channel condition (for example, an attenuation status of a signal amplitude in a unit length). The parameter information of the optical channel may be used to measure an amplitude error caused by the optical channel on an optical signal.

The amplitude measurement result of the optical channel includes a result of amplitude measurement performed by the optical receiving device on an optical signal received from the optical channel in a second slot, and the second slot may include one or more slots before the first slot. The result of amplitude measurement performed on the optical signal may indicate a value of an amplitude of the optical signal that is output by the optical channel. A manner of representing the value of the amplitude of the optical signal is not limited in this application. For example, the value of the amplitude of the optical signal may be represented by using a value of optical power of the optical signal, a value of a voltage of a voltage signal, or a value of a current of a current signal. The amplitude measurement result of the optical channel may be used to measure an amplitude error caused by the optical channel on an optical signal, and therefore may be used to determine a correspondence between an identifier of the optical channel and an amplitude compensation coefficient.

Optionally, an amplification factor of an amplitude indicated by the amplitude compensation coefficient of the optical channel is a ratio of a target amplitude to the amplitude of the optical signal that is output by the optical channel (referred to as an output amplitude for short). Correspondingly, the amplitude compensation coefficient may indicate the optical transmitting device to set a gain to a default gain * the ratio indicated by the amplitude compensation coefficient, so that a value of an amplitude of a signal sent by the optical transmitting device is a default value * the ratio indicated by the amplitude compensation coefficient.

Optionally, the amplitude measurement result of the optical channel may further include an amplitude of an optical signal that is input by the optical transmitting device to the optical channel in the second slot (referred to as an input amplitude for short). A value of an amplitude indicated by the amplitude compensation coefficient of the optical channel may be (the target amplitude/the output amplitude) * the input amplitude. Correspondingly, the amplitude compensation coefficient may indicate the optical transmitting device to adjust a value of an amplitude of a to-be-sent signal to the value indicated by the amplitude compensation coefficient.

The following describes, by using an example, a process in which the optical receiving device performs amplitude measurement on an optical signal received from the first optical channel in the second slot.

The optical transmitting device may report, to the controller, that there is a requirement for sending second data to the optical receiving device in the second slot, and the controller may control, in the second slot, the optical interconnection network to generate the first optical channel. The optical transmitting device may carry the second data on a second optical signal in the second slot, and input the second optical signal into the first optical channel. The second data may be service data or a preamble pre-learned by the optical receiving device. It is assumed that the target amplitude is X0, and an amplitude of an optical signal sent by the optical transmitting device is X. After receiving the second optical signal from the first optical channel in the second slot, the optical receiving device may perform amplitude measurement on the second optical signal (it is assumed that an indicated value of an amplitude is X'), and send an amplitude measurement result to the determining apparatus. The determining apparatus may determine a correspondence between the identifier of the first optical channel and the first amplitude compensation coefficient based on the amplitude measurement result and the identifier of the first optical channel. For example, the first amplitude compensation coefficient indicates that the absolute value of the amplitude is (X0/X') * X or an approximate value thereof, or indicates that the value of the amplification factor of the amplitude is X0/X' or an approximate value thereof.

Optionally, after obtaining an amplitude measurement result (referred to as a first amplitude measurement result) of an optical signal that is output by the first optical channel in the second slot, the determining apparatus or another apparatus may use an amplitude compensation coefficient (that is, the first amplitude compensation coefficient) in a plurality of amplitude compensation coefficients that matches the first amplitude measurement result as the amplitude compensation coefficient corresponding to the identifier of the first optical channel. It is assumed that the amplitude compensation coefficient indicates an amplitude of a sent signal. (X0/X') * X may be determined based on the first amplitude measurement result. The first amplitude compensation coefficient may be an amplitude compensation coefficient closest to (X0/X') * X in the plurality of amplitude compensation coefficients. For example, it is assumed that a maximum amplitude that can be configured by the optical transmitting device is 1, and the plurality of amplitude compensation coefficients are respectively 1/16, 2/16, ..., 15/16, and 1. If (X0/X') * X is 7/64, the first amplitude compensation coefficient may be 2/16.

It is assumed that the amplitude compensation information indicates amplitude compensation coefficients corresponding to n optical channels. Table 2 illustratively shows the amplitude compensation information. In Table 2, a first column represents an identifier of an optical channel, a second column represents an amplitude compensation coefficient of the optical channel, and an identifier and an amplitude compensation coefficient in a same row correspond to a same optical channel.

**Table 2**

| Identifier of an optical channel | Amplitude compensation coefficient |
|---|---|
| ID₂, IDₙ | 1/16 |
| ID₃ | 2/16 |
| ID₁, ID₄ | 3/16 |
| ... | ... |
| ID₅, IDₙ₋₁ | 1 |

Refer to Table 2. The amplitude compensation coefficient indicated by the amplitude compensation information is limited to a plurality of fixed values (16 values are used as an example in Table 2). This helps reduce a byte length of the amplitude compensation coefficient in the amplitude compensation information and save storage resources, and helps reduce amplitude compensation complexity of an optical communication device.

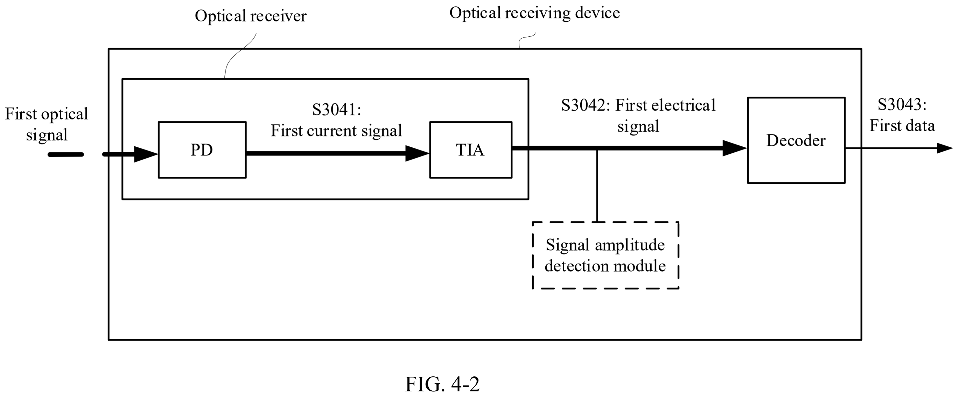

Amplitude measurement performed on the optical signal may indicate a detection result of an amplitude of the optical signal, or a measurement result of an amplitude of an electrical signal after the optical signal is converted into the electrical signal. Refer to FIG. 4-2. Optionally, the optical receiving device may further include a signal amplitude detection module, configured to perform amplitude measurement on a received optical signal.

The second slot may include one or more slots. The determining apparatus determines the amplitude compensation coefficient based on amplitude measurement results in a plurality of slots. This helps improve accuracy of the amplitude compensation coefficient. Optionally, after receiving the first optical signal from the first optical channel in the first slot, the optical receiving device further performs amplitude measurement on the first optical signal, and sends an amplitude measurement result to the determining apparatus. The determining apparatus may update, based on the amplitude measurement result, the amplitude compensation coefficient corresponding to the first optical channel.

In addition to the identifier of the first optical channel or the first amplitude compensation coefficient, the configuration information may further include other information.

For example, the configuration information further includes information about the first slot, to indicate the first slot. Alternatively, optionally, the configuration information may not include information about the first slot, and the optical receiving device may determine the first slot based on the configuration information. For example, the optical receiving device may use a p^{th} slot after reception of the configuration information as the first slot, where p is a positive integer. For example, the optical transmitting device may determine that the configuration information corresponds to the data transmission request, thereby determining that a slot indicated by the configuration information is the first slot.

For example, the configuration information may further include the address information of the optical transmitting device and/or the address information of the optical receiving device described above. Alternatively, the configuration information may not include the address information of the optical transmitting device or the address information of the optical receiving device. The optical transmitting device may determine that the configuration information corresponds to the data transmission request, thereby determining that a source device and a destination device indicated by the configuration information are the optical transmitting device and the optical receiving device respectively.

S303: The optical transmitting device carries the first data on the first optical signal in the first slot based on the first amplitude compensation coefficient according to the indication of the configuration information, and inputs the first optical signal on which amplitude compensation is performed into the first optical channel.

In a process of sending data, the optical transmitting device may carry the data on an optical signal, for example, obtain an electrical signal that carries the data, and then convert the electrical signal into the optical signal by using a modulator. That the optical transmitting device obtains the electrical signal that carries the data may mean that the optical transmitting device receives the electrical signal, or the optical transmitting device carries the data on the electrical signal, for example, encodes the data into an electrical signal form suitable for transmission by using an encoder.

In a process of carrying the data on the optical signal, the optical transmitting device may adjust an amplitude of the optical signal based on the first amplitude compensation coefficient. The first amplitude compensation coefficient may indicate a value of an amplitude compensation parameter, and the amplitude compensation parameter may be an amplification factor of a signal amplitude or a signal amplitude.

After receiving the configuration information, the optical transmitting device may carry the first data on an optical signal (referred to as the first optical signal) in the first slot based on the first amplitude compensation coefficient of the first optical channel according to the indication of the configuration information, and input the first optical signal on which amplitude compensation is performed into the first optical channel. In this way, after being transmitted through the first optical channel, the first optical signal reaches the optical receiving device at the target amplitude or an amplitude close to the target amplitude. For example, refer to FIG. 1. An amplitude, on arrival at the optical receiving device, of the first optical signal on which amplitude compensation is not performed is, for example, an amplitude of the optical signal 1 or the optical signal 2, and an amplitude, on arrival at the optical receiving device, of the first optical signal on which amplitude compensation is performed is, for example, an amplitude of the optical signal 3.

A manner in which the optical transmitting device adjusts an amplitude of an optical signal is not limited in this application. In this application, a circuit or module that is in the optical transmitting device and that is configured to adjust the amplitude of the optical signal is referred to as an amplitude compensation module, and the optical transmitting device may include one or more amplitude compensation modules. A type of the amplitude compensation module is not limited in this application. The optical transmitting device may adjust an amplitude of an electrical signal by configuring an encoder or an electrical domain amplifier, to adjust the amplitude of the optical signal, or may adjust the amplitude of the optical signal by configuring a modulator or an optical domain amplifier. Therefore, the amplitude compensation module may include at least one of an encoder, an electrical domain amplifier, a modulator, and an optical domain amplifier.

In a process of adjusting the amplitude of the optical signal based on the first amplitude compensation coefficient, the optical transmitting device may configure at least one amplitude compensation module based on the first amplitude compensation coefficient, and then use the configured amplitude compensation module to adjust the amplitude of the optical signal. The first amplitude compensation coefficient may indicate an amplitude of a signal that is output by a corresponding amplitude compensation module, or indicate an amplification factor (or a gain) of a corresponding amplitude compensation module. Alternatively, the optical transmitting device may determine, based on the first amplitude compensation coefficient, an amplitude compensation module that needs to be configured and a configured parameter.

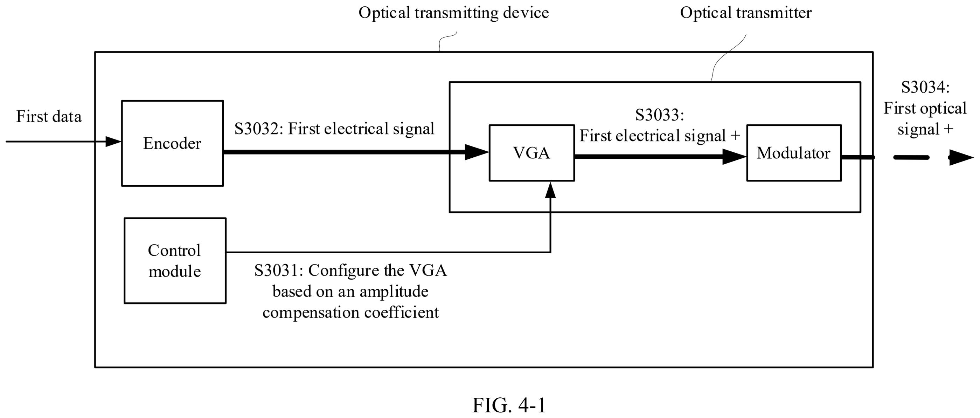

FIG. 4-1 illustratively shows a possible structure of an optical transmitting device. Refer to FIG. 4-1. The optical transmitting device includes a control module, an encoder, and an optical transmitter. Refer to FIG. 4-1. The optical transmitter may include a variable gain amplifier (variable gain amplifier, VGA) and a modulator. The VGA is configured to amplify an amplitude of an input electrical signal, and the modulator is configured to modulate an amplified electrical signal into an optical signal. The encoder is configured to carry received data on an electrical signal, and input the electrical signal into the VGA. The control module is configured to configure a gain of the VGA. The VGA is configured to adjust an amplitude of an electrical signal. The optical transmitter is configured to convert an electrical signal into an optical signal. The optical signal may be input into an optical channel provided by an optical interconnection network.

FIG. 4-1 further illustratively shows a possible detailed procedure of step S303. Refer to FIG. 4-1. S303 may include S3031 to S3034.

S3031: The control module configures the gain of the VGA in the first slot based on the first amplitude compensation coefficient according to the indication of the configuration information.

S3032: The encoder carries the first data on a first electrical signal in the first slot, and inputs the first electrical signal into the VGA.

S3033: The VGA amplifies the first electrical signal based on the configured gain, and inputs an amplified first electrical signal into the modulator.

The first electrical signal that is output by the VGA configured based on the first amplitude compensation coefficient is used to compensate for impact of the first optical channel on the amplitude of the optical signal, and the first electrical signal is referred to as a compensated first electrical signal (denoted as a first electrical signal +).
S3034: The modulator modulates the first electrical signal + into a first optical signal +.

The first optical signal obtained by modulating the first electrical signal + by the modulator is a compensated first optical signal, and may compensate for the impact of the first optical channel on the amplitude of the optical signal. The first optical signal is referred to as the compensated first optical signal (denoted as the first optical signal +).

FIG. 4-1 is merely an example. The optical transmitting device may include more or fewer elements, for example, may not include the VGA. The control module implements amplitude compensation on the first optical signal by configuring another amplitude compensation module.

Optionally, the optical interconnection network provides a maximum of a single optical channel for a single transmit port of the optical transmitting device in a single slot. Correspondingly, the optical transmitting device sends an optical signal through the first port in the first slot, that is, inputs the optical signal into the first optical channel.

Alternatively, optionally, the optical interconnection network may provide a plurality of optical channels for a single transmit port of the optical transmitting device in a single slot. The optical transmitting device may carry the address information of the optical receiving device on the first optical signal. After identifying the address information in the first optical signal, another optical communication device may not continue to process the first data. Correspondingly, it may be considered that the optical transmitting device sends an optical signal through the first port in the first slot, that is, inputs the optical signal into the first optical channel.

S304: The optical receiving device recovers, in the first slot, the first data from the first optical signal that is output by the first optical channel.

The first optical signal reaches the optical receiving device through the first optical channel, and the optical receiving device may receive the first optical signal from the first optical channel, and perform data recovery on the first optical signal.

Optionally, the optical interconnection network provides a maximum of a single optical channel for a single receive port of the optical receiving device in a single slot. Correspondingly, the optical receiving device receives an optical signal through the second port in the second slot, that is, receives the optical signal from the first optical channel.

Alternatively, optionally, the optical interconnection network may provide a plurality of optical channels for a single receive port of the optical receiving device in a single slot, and different optical communication devices send data to the optical receiving device in different slots. For example, the optical transmitting device sends the first data in the first slot. Correspondingly, the optical receiving device receives an optical signal through the second port in the first slot, that is, receives the optical signal from the first optical channel.

In a process of receiving data, the optical receiving device may convert an optical signal carrying the data into an electrical signal, and then recover the data from the electrical signal, for example, obtain the data from the electrical signal by using a decoder. In this application, the electrical signal may be a voltage signal. In a process of converting the optical signal carrying the data into the electrical signal, the optical receiving device may convert the optical signal into a current signal, and then convert the current signal into a voltage signal.

FIG. 4-2 illustratively shows a possible structure of an optical receiving device. Refer to FIG. 4-2. The optical receiving device includes a decoder and an optical receiver. The optical receiver is configured to convert an optical signal into an electrical signal, and the decoder is configured to recover data from the electrical signal. The optical receiver may include a photodetector (photodetector, PD) and a trans-impedance amplifier (trans-impedance amplifier, TIA). The PD is configured to convert an optical signal into a current signal, and the TIA is configured to convert the current signal into a voltage signal.

FIG. 4-2 further illustratively shows a possible detailed procedure of step S304. Refer to FIG. 4-2. S304 may include S3041 to S3043.

S3041: The PD converts the first optical signal into a first current signal.

S3042: The TIA converts the first current signal into a first electrical signal, and inputs the first electrical signal into the encoder.

S3043: The decoder recovers the first data from the first electrical signal.

FIG. 4-2 is merely used as an example. The optical receiving device may include more or fewer elements, for example, may further include a limiting amplifier and/or a clock and data recovery (clock and data recovery, CDR).

After being transmitted through the first optical channel (for example, the first optical signal shown in FIG. 4-2), the first optical signal on which amplitude compensation is performed (for example, the first optical signal + shown in FIG. 4-1) reaches the optical receiving device at the target amplitude or an amplitude close to the target amplitude (for example, an amplitude of the optical signal 3 shown in FIG. 1). This helps improve accuracy of data recovery performed by the optical receiving device on the first optical signal and reduce a bit error rate.

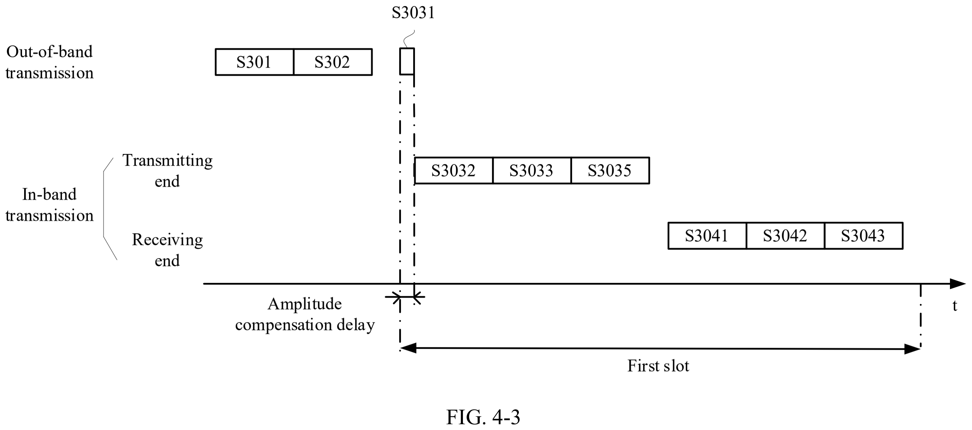

FIG. 4-3 is a diagram illustrating a slot for receiving data by the optical receiving device shown in FIG. 4-2. The optical receiving device may not need to configure the first amplitude compensation coefficient in the first slot by receiving the preamble. This helps reduce a link establishment delay of the optical receiving device, and improve data transmission efficiency of optical communication. Even if the optical receiving device still configures the first amplitude compensation coefficient by receiving the preamble, because the first optical signal compensated by a transmitting end reaches, after being transmitted through the first optical channel, the optical receiving device at a signal amplitude required by the optical receiving device or at an amplitude close to a signal amplitude required by the optical receiving device, this helps reduce a delay in configuring the first amplitude compensation coefficient by the optical receiving device, reduce overheads of the preamble (for example, as shown in FIG. 2), and improve data transmission efficiency of optical communication.

In addition, before actually sending the first optical signal, the optical transmitting device may determine a requirement for sending the first optical signal to the optical receiving device, and impact of a same optical channel on an amplitude of an optical signal is usually fixed. Therefore, as shown in FIG. 4-3, this helps the optical transmitting device and the controller respectively perform S301 and S302 before the first slot, and then helps the optical transmitting device quickly complete configuration of the first amplitude compensation coefficient (as shown in S3031) when the first slot arrives, thereby improving data transmission efficiency of optical communication.

Optionally, the optical interconnection network provides a fixed optical channel for an optical communication device in different slots. For example, an optical signal sent by the optical transmitting device through the first port in any slot is transmitted to the second port of the optical receiving device through the first optical channel. The controller may determine information about the first optical channel based on the data transmission request.

Optionally, the optical interconnection network may provide different optical channels for an optical communication device in different slots. The optical channel may include or pass through at least one optical switching device. The controller may be further configured to control the optical interconnection network to generate an optical channel between ports of different optical communication devices. Optionally, still refer to FIG. 3. The communication method may further include S305.

S305: The controller controls, based on the data transmission request, the optical interconnection network to generate the first optical channel in the first slot.

After receiving the data transmission request, the controller may control, based on the data transmission request, the optical interconnection network to generate the first optical channel in the first slot. In this way, the optical signal sent by the optical transmitting device through the first port in the first slot may reach the second port of the optical receiving device through the first optical channel.

Refer to FIG. 3. An optical controller may be separately connected to one or more optical switching devices, to control a process of switching an optical signal by the optical switching device, and generate an optical channel between different ports. The controller may be connected to the optical controller in the optical interconnection network. The controller sends an instruction to the optical controller, to indicate the optical controller to control the optical switching device to generate the first optical channel in the first slot. Alternatively, the controller may be the optical controller in the optical interconnection network.

Optionally, the optical interconnection network provides a plurality of optical channels between the optical transmitting device and the optical receiving device in a time division manner. For example, the controller may control, in a slot, the optical interconnection network to generate the first optical channel between the first port of the optical transmitting device and the second port of the optical receiving device, and control, in another slot, the optical interconnection network to generate a second optical channel between the first port and the second port. The identifier of the first optical channel may be different from an identifier of the second optical channel. Because an amplitude error caused by the second optical channel on the optical signal may be different from an amplitude error caused by the first optical channel on the optical signal, the determining apparatus determines the amplitude compensation coefficient of the first optical channel based on the identifier of the first optical channel. This helps more accurately compensate for the amplitude error in the signal and further reduce a bit error rate.

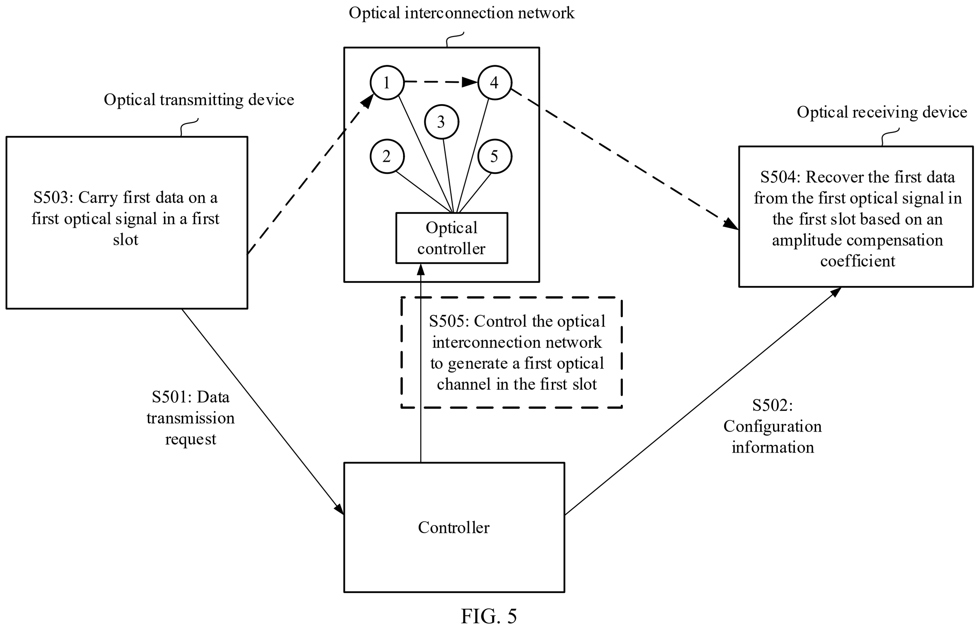

FIG. 5 illustratively shows another possible structure of a system according to this application. Refer to FIG. 5. An optical transmitting device may be understood with reference to the optical communication device 1, the optical communication device 3, or the optical communication device 5 shown in FIG. 1, an optical receiving device may be understood with reference to the optical communication device 2 shown in FIG. 1, and a controller and an optical interconnection network may be respectively understood with reference to the controller and the optical interconnection network shown in FIG. 1.

A circle shown in FIG. 5 may represent an optical switching device in the optical interconnection network. In FIG. 5, an example in which the optical interconnection network includes an optical switching device 1 to an optical switching device 5 is used. The optical interconnection network may include more or fewer optical switching devices. In FIG. 5, a solid line with an arrow represents an out-of-band channel, and the out-of-band channel is used to transmit an optical signal or an electrical signal. In FIG. 5, a dashed line with an arrow represents an in-band channel, and the in-band channel is used to transmit an optical signal. In this application, an optical channel that is in the optical interconnection network and that is used to transmit, to an optical receiving device, an optical signal sent by an optical transmitting device is referred to as a first optical channel. Refer to FIG. 5. An optical signal that is input by the optical transmitting device to the first optical channel may be forwarded to the optical receiving device sequentially through the optical switching device 1 and the optical switching device 4. A quantity of optical switching devices that are included in the first optical channel or through which the first optical channel passes is not limited in this application. Optionally, the first optical channel may not include or not pass through any optical switching device.

FIG. 5 further illustratively shows another possible procedure of a communication method according to this application. In the method shown in FIG. 5, a system compensates for an amplitude error on an optical receiving device side based on a first amplitude compensation coefficient of an optical channel. Refer to FIG. 5. The communication method may include S501 to S504.

S501: An optical transmitting device sends a data transmission request to a controller, and correspondingly, the controller may receive the data transmission request from the optical transmitting device.

Step S501 may be understood with reference to content of S301. Details are not described herein again.

S502: The controller sends configuration information to an optical receiving device based on the data transmission request, and correspondingly, the optical receiving device may receive the configuration information.

After receiving the data transmission request, the controller may determine the first optical channel between the optical transmitting device and the optical receiving device, and then send the configuration information to the optical receiving device based on the data transmission request. The configuration information indicates the optical receiving device to receive the first data in the first slot based on a first amplitude compensation coefficient of the first optical channel, and the first amplitude compensation coefficient of the first optical channel may be used to compensate for impact of the first optical channel on an amplitude of an optical signal. For ease of description, the first amplitude compensation coefficient indicated by the configuration information is referred to as a first amplitude compensation coefficient below. Correspondingly, the optical transmitting device may receive the configuration information, and determine an indication of the configuration information.

Optionally, the controller may determine an identifier of the first optical channel based on the data transmission request, and then determine the first amplitude compensation coefficient based on the identifier of the first optical channel. Correspondingly, the configuration information may include the first amplitude compensation coefficient.

The first amplitude compensation coefficient may indicate a value of an amplitude (referred to as a first amplitude value) or a value of an amplification factor of an amplitude (referred to as a first amplification factor). The value indicated by the first amplitude compensation coefficient may be an absolute value or a relative value. It is assumed that the relative value indicated by the first amplitude compensation coefficient is a relative value of the value of the amplitude relative to a target value, and the target value is a determined value. A meaning of the target value is not limited in this application. For example, the target value may represent a maximum value of an amplitude compensation coefficient supported by the optical receiving device, or the target value may represent an amplitude compensation coefficient configured by the optical receiving device currently or by default, or the target value may be a value of a minimum amplitude variation supported by the optical receiving device.

Optionally, after determining the identifier of the first optical channel, the controller may carry the identifier of the first optical channel on the configuration information. After receiving the configuration information, the optical receiving device may determine the first amplitude compensation coefficient based on the identifier of the first optical channel. Correspondingly, the configuration information may not include the first amplitude compensation coefficient. This helps reduce a length of control information, and save transmission resources of a control channel.

For ease of description, in this application, an apparatus configured to determine the first amplitude compensation coefficient based on the identifier of the first optical channel is referred to as a determining apparatus, and the determining apparatus may be the controller, the optical receiving device, or another device.

The determining apparatus may obtain amplitude compensation information, where the amplitude compensation information indicates a correspondence between an identifier of an optical channel in the optical interconnection network and an amplitude compensation coefficient. After determining the identifier of the first optical channel, the determining apparatus may obtain, from the amplitude compensation information, an amplitude compensation coefficient (that is, the first amplitude compensation coefficient) corresponding to the identifier of the first optical channel.

For the amplitude compensation information and a manner in which the determining apparatus obtains the amplitude compensation information, refer to related content in S302.

In addition to the identifier of the first optical channel or the first amplitude compensation coefficient, the configuration information may further include other information.

For example, the configuration information further includes information about the first slot, to indicate the first slot. Alternatively, optionally, the configuration information may not include information about the first slot, and the optical receiving device may determine the first slot based on the configuration information. For example, the optical receiving device may use a p^{th} slot after reception of the configuration information as the first slot, where p is a positive integer.

For example, the configuration information may further include the address information of the optical transmitting device and/or the address information of the optical receiving device described above.

S503: The optical transmitting device carries the first data on a first optical signal in the first slot, and inputs the first optical signal into the first optical channel.

In a process of sending data, the optical transmitting device may carry the data on an optical signal, for example, obtain an electrical signal that carries the data, and then convert the electrical signal into the optical signal by using a modulator. That the optical transmitting device obtains the electrical signal that carries the data may mean that the optical transmitting device receives the electrical signal, or the optical transmitting device carries the data on the electrical signal, for example, encodes the data into an electrical signal form suitable for transmission by using an encoder.

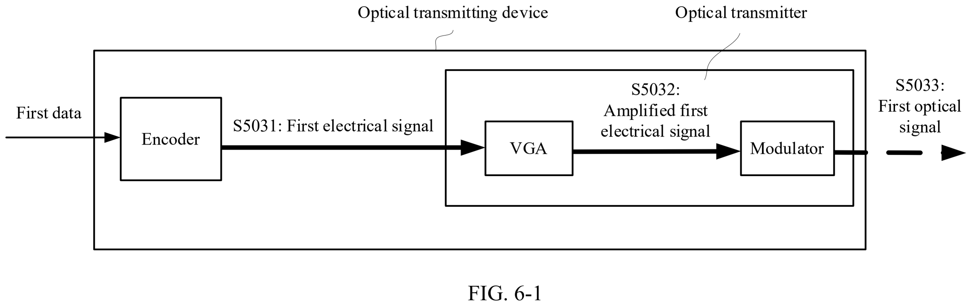

FIG. 6-1 illustratively shows another possible structure of an optical transmitting device. Refer to FIG. 6-1. The optical transmitting device includes an encoder and an optical transmitter. The encoder and the optical transmitter may be understood with reference to the encoder and the optical transmitter in FIG. 4-1. For example, the optical transmitter includes a VGA and a modulator.

FIG. 6-1 further illustratively shows a possible detailed procedure of step S503. Refer to FIG. 6-1. S503 may include S5031 to S5033.

S5031: The encoder carries the first data on a first electrical signal in the first slot, and inputs the first electrical signal into the VGA.

S5032: The VGA amplifies the first electrical signal, and inputs an amplified first electrical signal into the modulator.

A gain of the VGA may be configured by default. Therefore, the amplified first electrical signal cannot compensate for impact of the first optical channel on a signal amplitude.

S5033: The modulator modulates the first electrical signal into the first optical signal.

The modulator modulates the first electrical signal to obtain the first optical signal, and the first optical signal cannot compensate for the impact of the first optical channel on the signal amplitude.

FIG. 6-1 is merely used as an example. The optical transmitting device may include more or fewer elements, for example, may not include the VGA.

S504: The optical receiving device recovers, in the first slot based on the first amplitude compensation coefficient according to an indication of the configuration information, the first data from the first optical signal that is output by the first optical channel.

The first optical signal reaches the optical receiving device through the first optical channel, and the optical receiving device may receive the first optical signal from the first optical channel, and perform data recovery on the first optical signal.

In a process of receiving data, the optical receiving device may convert an optical signal carrying the data into an electrical signal, and then recover the data from the electrical signal, for example, obtain the data from the electrical signal by using a decoder. In this application, the electrical signal may be a voltage signal. In a process of converting the optical signal carrying the data into the electrical signal, the optical receiving device may convert the optical signal into a current signal, and then convert the current signal into a voltage signal.

In a process of recovering data from an optical signal, the optical receiving device may adjust an amplitude of the optical signal based on the first amplitude compensation coefficient. The first amplitude compensation coefficient may indicate a value of an amplitude compensation parameter, and the amplitude compensation parameter may be an amplification factor of a signal amplitude or a signal amplitude.

After receiving the configuration information, the optical receiving device may recover, in the first slot based on the first amplitude compensation coefficient of the first optical channel according to the indication of the configuration information, the first data from the first optical signal that is output by the first optical channel. In this way, after the first optical signal is transmitted through the first optical channel, the optical receiving device compensates an amplitude of the first optical signal to a target amplitude or an amplitude close to a target amplitude. For example, refer to FIG. 1. An amplitude, on arrival at the optical receiving device, of the first optical signal is, for example, an amplitude of the optical signal 1 or the optical signal 2, and an amplitude obtained through amplitude compensation is, for example, an amplitude of the optical signal 3.

A manner in which the optical receiving device adjusts an amplitude of an optical signal is not limited in this application. In this application, a circuit or module that is in the optical receiving device and that is configured to adjust the amplitude of the optical signal is referred to as an amplitude compensation module, and the optical receiving device may include one or more amplitude compensation modules. A type of the amplitude compensation module is not limited in this application. The optical receiving device may adjust an amplitude of an electrical signal by configuring an encoder or an electrical domain amplifier, to adjust the amplitude of the optical signal, or may adjust the amplitude of the optical signal by using a PD, an electrical domain amplifier (for example, a TIA), a decoder, or an optical domain amplifier. Therefore, the amplitude compensation module may include at least one of a PD, an electrical domain amplifier, a decoder, and an optical domain amplifier.

In a process of adjusting the amplitude of the optical signal based on the first amplitude compensation coefficient, the optical receiving device may configure at least one amplitude compensation module based on the first amplitude compensation coefficient, and then use the configured amplitude compensation module to adjust the amplitude of the optical signal. The first amplitude compensation coefficient may indicate an amplitude of a signal that is output by a corresponding amplitude compensation module, or indicate an amplification factor (or a gain) of a corresponding amplitude compensation module. Alternatively, the optical receiving device may determine, based on the first amplitude compensation coefficient, an amplitude compensation module that needs to be configured and a configured parameter.

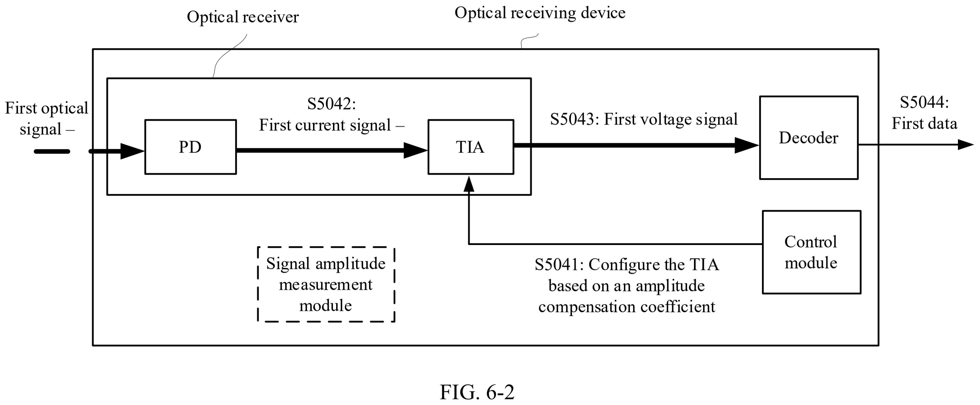

FIG. 6-2 illustratively shows another possible structure of an optical receiving device. Refer to FIG. 6-2. The optical receiving device includes a control module, a decoder, and an optical receiver. The optical receiver is configured to convert an optical signal into an electrical signal, and the decoder is configured to recover data from the electrical signal. The optical receiver may include a PD and a TIA. The PD is configured to convert an optical signal into a current signal, and the TIA is configured to convert the current signal into a voltage signal. The control module is configured to configure a gain of the TIA.

FIG. 6-2 further illustratively shows a possible detailed procedure of step S504. Refer to FIG. 6-2. S504 may include S5041 to S5044.

S5041: The control module configures the gain of the TIA in the first slot based on the first amplitude compensation coefficient according to the indication of the configuration information.

S5042: The PD converts the first optical signal into a first current signal -, and inputs the first current signal into the TIA.

An amplitude of the first optical signal sent by the optical transmitting device is not compensated for the first optical channel. Therefore, the first optical signal reaching the optical receiving device is referred to as a first optical signal -, and a first current signal obtained through conversion by the PD is referred to as the first current signal -.

S5043: The TIA amplifies the first current signal - based on the configured gain, and inputs an amplified first voltage signal into the decoder.

S5044: The decoder recovers the first data from the first voltage signal.

FIG. 6-2 is merely used as an example. The optical receiving device may include more or fewer elements, for example, may further include a limiting amplifier and/or a clock and data recovery (clock and data recovery, CDR).

The TIA may convert the attenuated first current signal - into the first voltage signal on which amplitude compensation is performed. This helps improve accuracy of data recovery performed by the decoder on the first voltage signal and reduce a bit error rate.

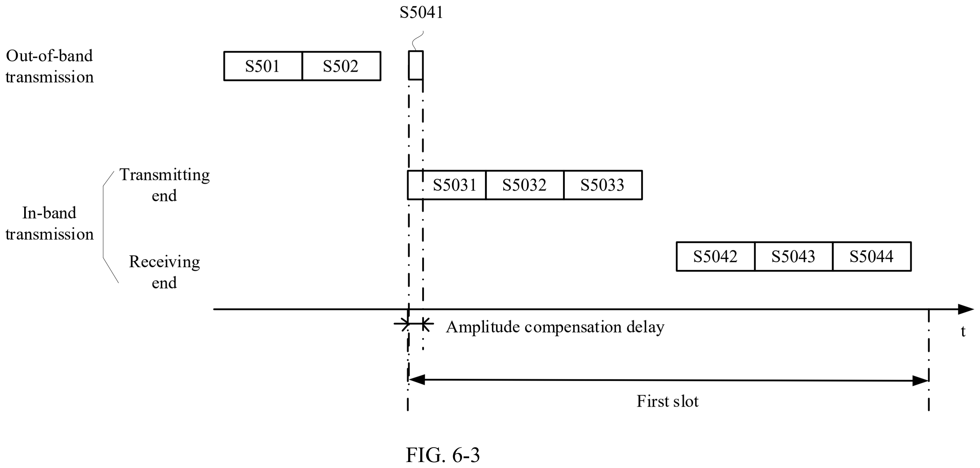

FIG. 6-3 is a diagram illustrating a slot for receiving data by the optical receiving device shown in FIG. 4-2. The controller may send the configuration information to the optical receiving device before the first slot. This helps the optical receiving device quickly complete configuration of the first amplitude compensation coefficient (as shown in S5041) when the first slot arrives, and helps reduce a link establishment delay (for example, an amplitude compensation delay) of the optical receiving device, and improve data transmission efficiency of optical communication. Even if the optical receiving device still adjusts the first amplitude compensation coefficient by receiving the preamble, a delay in searching for an optimal first amplitude compensation coefficient near the first amplitude compensation coefficient is shorter. Therefore, this still helps reduce a delay in configuring the first amplitude compensation coefficient by the optical receiving device, reduce overheads of the preamble (for example, as shown in FIG. 2), and then improve data transmission efficiency of optical communication.

For a manner in which the optical interconnection network provides the first optical channel in the first slot, refer to the foregoing related content. For example, optionally, still refer to FIG. 5. The communication method may further include S505.

S505: The controller controls, based on the data transmission request, the optical interconnection network to generate the first optical channel in the first slot.

S505 may be understood with reference to related content of S305. Details are not described herein again.

Optionally, the controller may send the configuration information to the optical transmitting device based on the data transmission request, where the configuration information indicates the optical transmitting device to send the first data in the first slot based on a first transmitting-end amplitude compensation coefficient of the first optical channel in the optical interconnection network; and send the configuration information to the optical receiving device, where the configuration information indicates the optical receiving device to receive the first data in the first slot based on a first receiving-end amplitude compensation coefficient of the first optical channel. The system may be based on the first amplitude compensation coefficient of the optical channel. Correspondingly, the optical transmitting device may carry the first data on the first optical signal in the first slot based on the first transmitting-end amplitude compensation coefficient according to the indication of the configuration information, and then input the first optical signal on which amplitude compensation is performed into the first optical channel. The optical receiving device may recover, in the first slot based on the first receiving-end amplitude compensation coefficient according to the indication of the configuration information, the first data from the first optical signal that is output by the first optical channel.

The first transmitting-end amplitude compensation coefficient and the first receiving-end amplitude compensation coefficient may be the same or different. Optionally, the first transmitting-end amplitude compensation coefficient and the first receiving-end compensation coefficient each are less than the first amplitude compensation coefficient. In some examples, a sum of a value of an amplification factor indicated by the first transmitting-end amplitude compensation coefficient and a value of an amplification factor indicated by the first receiving-end compensation coefficient may be equal to a value of an amplification factor indicated by the first amplitude compensation coefficient. Compared with compensating for an amplitude error at a single end, compensating for an amplitude error at both a receiving end and a transmitting end helps reduce a requirement for a maximum gain supported by an amplifier.

After an optical network forms a cluster, there are tens of thousands of ports. Any increase in a transmitted data amount and any increase in optical channels affect a switching delay, and further affect an amplitude compensation delay. Based on the data transmission request and the first amplitude compensation coefficient of the optical channel, the optical transmitting device or the optical receiving device is indicated to configure the first amplitude compensation coefficient before a slot arrives, to reduce problems of a high transmission bandwidth and a delay. In addition, the optical receiving device does not need to perform a threshold establishment operation or a limiting amplification operation. Finally, fast receiving and locking at a level of ns are implemented.

In some scenarios, the amplitude or the signal amplitude mentioned in this application may be replaced with signal strength or optical power as required. A form of the first data is not limited in this application. For example, the first data may be data carried in an electrical signal. In a process in which the optical transmitting device carries the first data on an optical signal, the optical transmitting device converts the electrical signal carrying the first data into the optical signal. A transmission mode of the first optical signal is not limited in this application. For example, the first optical signal may be a signal in an optical burst mode (or referred to as an optical burst signal).

The system provided in this application may support time division multiplexing, different data transmission requests may correspond to different slots, and the system may occupy the slot corresponding to the data transmission request to transmit corresponding data. As shown in FIG. 5, actual duration for sending the first data in the first slot by the optical transmitting device may be less than duration of the first slot. Correspondingly, actual duration of the first slot indicated by the data transmission request may be less than the duration of the first slot. Similarly, actual duration for receiving the first data in the first slot by the optical receiving device may be less than the duration of the first slot. Correspondingly, the first slot indicated by the configuration information may be a part of a time range in the first slot.

A system and a method run on the system are described above. To better implement the foregoing method in this application, the following provides a related apparatus or device configured to implement the foregoing method.

This application provides a controller. The controller may perform any method procedure performed by the foregoing controller. An implementation of the controller is not limited in this application.

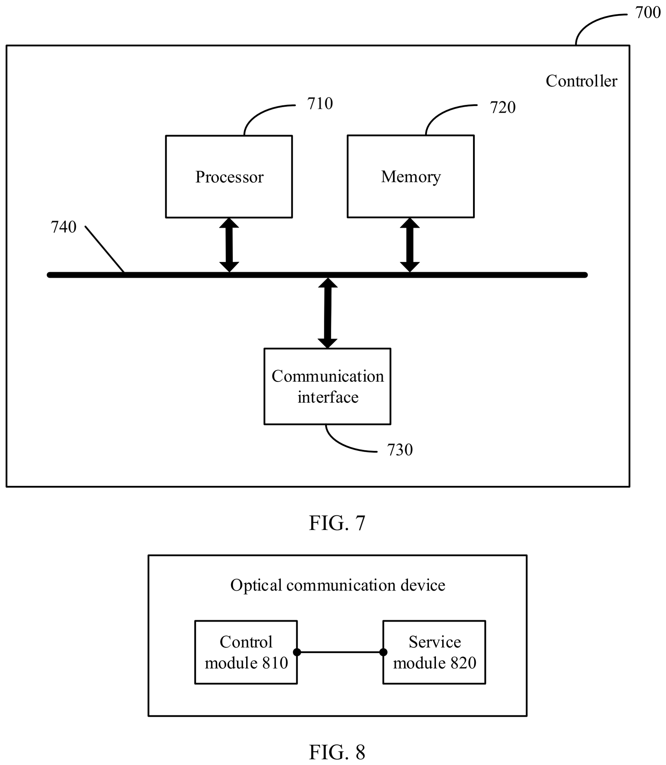

Optionally, refer to FIG. 7. The controller 700 may include a processor 710, a memory 720, and a communication interface 730. The processor 710 and the memory 720 are connected to each other.

The processor 710 may include one or more general-purpose processors, for example, a central processing unit (central processing unit, CPU), or a combination of a CPU and a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The memory 720 may include a volatile memory (volatile memory), for example, a random access memory (random access memory, RAM). The memory 720 may also include a non-volatile memory (non-volatile memory), for example, a read-only memory (read-only memory, ROM), a flash memory (flash memory), a hard disk drive (hard disk drive, HDD), or a solid-state drive (solid-state drive, SSD). The memory 720 may further include a combination of the foregoing types.

The memory 720 stores computer instructions. By executing these computer instructions, the processor 710 can perform the steps performed by the controller described above, for example, perform one or more of S301, S302, and S305, or perform one or more of S501, S502, and S505.

The communication interface 730 is a wired interface, and is configured to connect to a wired link such as a cable or an optical fiber. Alternatively, optionally, the communication interface 730 is a wireless interface. The processor 710 may be connected to the communication interface 730, to communicate with another device through the communication interface 730. For example, through the communication interface 730, the processor 710 may receive a data transmission request from an optical transmitting device, send configuration information to the optical transmitting device or an optical receiving device, and control an optical interconnection network to generate a first optical channel.

Optionally, the processor 710, the memory 720, and the communication interface 730 may be connected to each other by using a bus 740. The bus 740 may be a peripheral component interconnect (peripheral component interconnect, PCI) bus, an extended industry standard architecture (extended industry standard architecture, EISA) bus, or the like. The bus 740 may be classified into an address bus, a data bus, a control bus, or the like. For ease of representation, only one bold line is used for representation in FIG. 7, but this does not mean that there is only one bus or only one type of bus.

In FIG. 7, an example in which the processor 710 and the memory 720 are integrated into the controller 700 is used. Optionally, the controller 700 does not include the memory 720, and the memory 720 is disposed outside the controller 700.

Optionally, the controller may include a receiving module and a sending module. The receiving module is configured to perform S301 or S501, and the sending module is configured to perform S302 or S502. Optionally, the sending module is further configured to perform S305 or S505. Implementations of the receiving module and the sending module are not limited in this application, and the receiving module and the sending module may be implemented in a form of hardware, or may be implemented in a form of a software functional unit, or may be implemented in a combination of software and hardware.

Optionally, the controller is a chip, and the chip includes one or more processors. Some or all processors are configured to read and execute a computer program stored in the memory, to perform any method procedure performed by the foregoing controller. The chip may further include an electrical communication component, and the electrical communication component may be, for example, an input/output interface, a pin, or a circuit. Optionally, the memory may be a storage unit in the chip, for example, a register or a cache. The memory may alternatively be a storage unit located outside the chip, for example, a read-only memory (read-only memory, ROM), an EEPROM, another type of static storage device that can store static information and instructions, or a random access memory (random access memory, RAM).

For a method procedure performed by the controller and an effect, refer to related content of the corresponding method. Details are not described herein again.

This application provides an optical communication device. The optical communication device may be configured to perform the method performed by the foregoing optical transmitting device. An implementation of the optical communication device is not limited in this application. For example, the optical communication device may be the optical transmitting device shown in FIG. 3, FIG. 4-1, or FIG. 6-1. Optionally, refer to FIG. 8. The optical communication device may include a control module 810 and a service module 820. The control module 810 is configured to perform S301 and S302, and the service module 820 is configured to perform S303. Alternatively, the control module 810 is configured to perform S501, and the service module 820 is configured to perform S503.

Alternatively, the optical communication device may be configured to perform the method performed by the foregoing optical receiving device. An implementation of the optical communication device is not limited in this application. For example, the optical communication device may be the optical receiving device shown in FIG. 3, FIG. 4-2, FIG. 5, or FIG. 6-2. Optionally, refer to FIG. 8. The optical communication device may include a control module 810 and a service module 820. The control module 810 is configured to perform S502, and the service module 820 is configured to perform S504. Alternatively, the optical communication device includes a service module, and the service module is configured to perform S304.

An implementation of the control module is not limited in this application. For example, the control module may be a processor or a multipoint control unit (Multipoint control unit, MCU).

An implementation of the service module is not limited in this application. An optical transmitting device is used as an example. Refer to FIG. 4-1. The service module 820 may include an encoder, a VGA, and a modulator. An optical receiving device is used as an example. Refer to FIG. 4-2. The service module 820 may include a decoder, a PD, and a TIA.

Optionally, the optical communication device may be an optical interface. Alternatively, optionally, the optical communication device is a communication device provided with an optical interface, at least one element in the service module may be deployed in the optical interface, and the optical interface may be an onboard optical interface or a pluggable optical interface in the communication device.

This application provides a system. The system may be all or some devices in the system described above, for example, include an optical transmitting device and an optical receiving device, or include an optical transmitting device and a controller, or include an optical receiving device and a controller, or include a controller and an optical interconnection network, or include a controller, an optical transmitting device, and an optical receiving device, or include an optical interconnection network, a controller, an optical transmitting device, and an optical receiving device.

Division into the modules or units described in FIG. 7 or FIG. 8 is merely an example, and is merely logical function division. There may be other division manners during actual implementation. For example, a plurality of modules or units may be combined or integrated into another system, or some features may be ignored or not performed.

This application further provides a computer-readable storage medium. The computer-readable storage medium stores a computer program. When the computer program is executed by a processor, some or all of the steps recorded in any one of the foregoing method examples may be implemented. The computer-readable storage medium may be any usable medium accessible to a general-purpose or dedicated computer. An example of the present invention further provides a computer program. The computer program includes instructions. When the computer program is executed by a computer, the computer is enabled to perform some or all steps in any method example. Persons of ordinary skill in the art may understand that the computer-readable storage medium includes any non-transitory (non-transitory) machine-readable medium that can store program code, for example, a USB flash drive, a removable hard disk, a magnetic disk, an optical disc, a RAM, an SSD, or a non-volatile memory (non-volatile memory).

The apparatuses provided in examples of this application may be configured to perform the foregoing corresponding example methods. Therefore, for technical effects that can be achieved by the apparatus examples in this application, refer to the technical effects achieved by the foregoing corresponding method examples. Details are not described herein again.

It may be clearly understood by persons skilled in the art that, for the purpose of convenient and brief description, for a detailed working process of the foregoing described system, apparatus, and unit, refer to a corresponding process in the foregoing method examples. Details are not described herein again. "A and/or B" in examples of this application may be understood as including two solutions: "A and B" and "A or B". In the specification, claims, and accompanying drawings of this application, terms "first", "second", and the like are intended to distinguish between similar objects but do not necessarily indicate a specific order or sequence. It should be understood that the terms used in such a way are interchangeable in proper circumstances. This is merely a differentiation manner that is used when objects having a same attribute are described in examples of this application.

In the several examples provided in this application, it should be understood that the disclosed module, apparatus, or device may be implemented in other manners. For example, the described apparatus examples are merely examples. For example, division into the units is merely logical function division. There may be other division manners during actual implementation. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical or another form.

Finally, it should be noted that the foregoing embodiments are merely used to describe the technical solutions of the present invention, but not limit the technical solutions of the present invention. Although the present invention is described in detail with reference to the foregoing embodiments, persons of ordinary skill in the art should understand that they may still modify the technical solutions described in the foregoing embodiments, or perform equivalent replacement on some technical features thereof. However, these modifications or replacements do not make the essence of the corresponding technical solutions depart from the protection scope of the technical solutions in embodiments of the present invention.

## Claims

1. A method, comprising:
sending, by an optical transmitting device, a data transmission request to a controller, wherein the data transmission request indicates that the optical transmitting device has a requirement for sending first data to an optical receiving device in a first slot;
sending, by the controller, configuration information to the optical transmitting device based on the data transmission request, wherein the configuration information indicates the optical transmitting device to send the first data in the first slot based on a first amplitude compensation coefficient of a first optical channel in an optical interconnection network, and the first optical channel is used to transmit, to the optical receiving device in the first slot, an optical signal sent by the optical transmitting device;
carrying, by the optical transmitting device, the first data on a first optical signal in the first slot based on the first amplitude compensation coefficient according to an indication of the configuration information, and then inputting the first optical signal on which amplitude compensation is performed into the first optical channel; and
recovering, by the optical receiving device in the first slot, the first data from the first optical signal that is output by the first optical channel.

2. The method according to claim 1, wherein the first amplitude compensation coefficient is an amplitude compensation coefficient that corresponds to an identifier of the first optical channel and that is obtained from amplitude compensation information, and the amplitude compensation information indicates a correspondence between an identifier of an optical channel in the optical interconnection network and an amplitude compensation coefficient.

3. The method according to claim 2, wherein the amplitude compensation information is determined based on an amplitude measurement result of an optical signal that is output by the optical channel in the optical interconnection network in a second slot, and the second slot comprises one or more slots before the first slot.

4. The method according to claim 3, wherein the amplitude compensation coefficient that corresponds to the identifier of the first optical channel and that is indicated by the amplitude compensation information is an amplitude compensation coefficient in a plurality of amplitude compensation coefficients that matches a first amplitude measurement result, and the first amplitude measurement result is an amplitude measurement result of an optical signal that is output by the first optical channel in the second slot.

5. The method according to any one of claims 2 to 4, wherein the identifier of the first optical channel is used to determine the first optical channel from a plurality of optical channels in the optical interconnection network, and at least two optical channels in the plurality of optical channels are separately used to transmit, to the optical receiving device, the optical signal sent by the optical transmitting device.

6. The method according to any one of claims 1 to 5, wherein carrying, by the optical transmitting device, the first data on the first optical signal based on the first amplitude compensation coefficient comprises:
carrying, by the optical transmitting device, the first data on a first electrical signal;
performing, by the optical transmitting device, amplitude compensation on the first electrical signal based on the first amplitude compensation coefficient; and
converting, by the optical transmitting device, the first electrical signal into the first optical signal.

7. The method according to any one of claims 1 to 6, wherein the first amplitude compensation coefficient indicates a value of an amplitude or a value of an amplification factor of an amplitude.

8. The method according to any one of claims 1 to 7, wherein the optical interconnection network comprises one or more optical switching devices, and the method further comprises:
controlling, by the controller based on the data transmission request, the optical interconnection network to generate the first optical channel in the first slot.

9. A system, wherein the system comprises a plurality of optical communication devices and a controller, and the plurality of optical communication devices comprise an optical transmitting device and an optical receiving device;
the optical transmitting device is configured to send a data transmission request to the controller, wherein the data transmission request indicates that the optical transmitting device has a requirement for sending first data to the optical receiving device in a first slot;
the controller is configured to send configuration information to the optical transmitting device based on the data transmission request, wherein the configuration information indicates the optical transmitting device to send the first data in the first slot based on a first amplitude compensation coefficient of a first optical channel in an optical interconnection network, and the first optical channel is used to transmit, to the optical receiving device in the first slot, an optical signal sent by the optical transmitting device;
the optical transmitting device is configured to carry the first data on a first optical signal in the first slot based on the first amplitude compensation coefficient according to an indication of the configuration information, and then input the first optical signal on which amplitude compensation is performed into the first optical channel; and
the optical receiving device is configured to recover, in the first slot, the first data from the first optical signal that is output by the first optical channel.

10. A method, comprising:
sending, by an optical transmitting device, a data transmission request to a controller, wherein the data transmission request indicates that the optical transmitting device has a requirement for sending first data to an optical receiving device in a first slot;
sending, by the controller, configuration information to the optical receiving device based on the data transmission request, wherein the configuration information indicates the optical receiving device to receive the first data in the first slot based on a first amplitude compensation coefficient of a first optical channel in an optical interconnection network, and the first optical channel is used to transmit, to the optical receiving device in the first slot, an optical signal sent by the optical transmitting device;
carrying, by the optical transmitting device, the first data on a first optical signal in the first slot, and then inputting the first optical signal into the first optical channel; and
recovering, by the optical receiving device in the first slot based on the first amplitude compensation coefficient according to an indication of the configuration information, the first data from the first optical signal that is output by the first optical channel.

11. A system, wherein the system comprises a plurality of optical communication devices and a controller, and the plurality of optical communication devices comprise an optical transmitting device and an optical receiving device;
the optical transmitting device is configured to send a data transmission request to the controller, wherein the data transmission request indicates that the optical transmitting device has a requirement for sending first data to the optical receiving device in a first slot;
the controller is configured to send configuration information to the optical receiving device based on the data transmission request, wherein the configuration information indicates the optical receiving device to receive the first data in the first slot based on a first amplitude compensation coefficient of a first optical channel in an optical interconnection network, and the first optical channel is used to transmit, to the optical receiving device in the first slot, an optical signal sent by the optical transmitting device;
the optical transmitting device is configured to carry the first data on a first optical signal in the first slot, and then input the first optical signal into the first optical channel; and
the optical receiving device is configured to recover, in the first slot based on the first amplitude compensation coefficient according to an indication of the configuration information, the first data from the first optical signal that is output by the first optical channel.

12. A method, comprising:
receiving a data transmission request from an optical transmitting device, wherein the data transmission request indicates that the optical transmitting device has a requirement for sending a first optical signal to an optical receiving device in a first slot; and
sending configuration information to the optical transmitting device or the optical receiving device based on the data transmission request, wherein the configuration information indicates the optical transmitting device to send the first data in the first slot based on a first amplitude compensation coefficient of a first optical channel in an optical interconnection network, or indicates the optical receiving device to receive the first data in the first slot based on the first amplitude compensation coefficient of the first optical channel, and the first optical channel is used to transmit, to the optical receiving device in the first slot, an optical signal sent by the optical transmitting device.

13. The method according to claim 12, wherein the first amplitude compensation coefficient is an amplitude compensation coefficient that corresponds to an identifier of the first optical channel and that is obtained from amplitude compensation information, and the amplitude compensation information indicates a correspondence between an identifier of an optical channel in the optical interconnection network and an amplitude compensation coefficient.

14. The method according to claim 13, wherein the amplitude compensation information is determined based on an amplitude measurement result of an optical signal that is output by the optical channel in the optical interconnection network in a second slot, and the second slot comprises one or more slots before the first slot.

15. The method according to claim 14, wherein the amplitude compensation coefficient that corresponds to the identifier of the first optical channel and that is indicated by the amplitude compensation information is an amplitude compensation coefficient in a plurality of amplitude compensation coefficients that matches a first amplitude measurement result, and the first amplitude measurement result is an amplitude measurement result of an optical signal that is output by the first optical channel in the second slot.

16. The method according to any one of claims 13 to 15, wherein the identifier of the first optical channel is used to determine the first optical channel from a plurality of optical channels in the optical interconnection network, and at least two optical channels in the plurality of optical channels are separately used to transmit, to the optical receiving device, the optical signal sent by the optical transmitting device.

17. The method according to any one of claims 12 to 16, wherein the first amplitude compensation coefficient indicates a value of an amplitude or a value of an amplification factor of an amplitude.

18. The method according to any one of claims 12 to 17, wherein the optical interconnection network comprises one or more optical switching devices, and the method further comprises:
controlling, based on the data transmission request, the optical interconnection network to generate the first optical channel in the first slot.

19. A controller, comprising a processor and a memory, wherein the processor is configured to execute computer instructions stored in the memory, to perform the method according to any one of claims 12 to 18.

20. A method, comprising:
sending a data transmission request to a controller, wherein the data transmission request indicates that an optical transmitting device has a requirement for sending first data to an optical receiving device in a first slot;
receiving configuration information from the controller, wherein the configuration information indicates the optical transmitting device to send the first data in the first slot based on a first amplitude compensation coefficient of a first optical channel in an optical interconnection network, and the first optical channel is used to transmit, to the optical receiving device in the first slot, an optical signal sent by the optical transmitting device; and
carrying the first data on a first optical signal in the first slot based on the first amplitude compensation coefficient according to an indication of the configuration information, and then inputting the first optical signal on which amplitude compensation is performed into the first optical channel.

21. The method according to claim 20, wherein carrying the first data on the first optical signal based on the first amplitude compensation coefficient comprises:
carrying the first data on a first electrical signal;
performing amplitude compensation on the first electrical signal based on the first amplitude compensation coefficient; and
converting the first electrical signal into the first optical signal.

22. An optical transmitting device, wherein the optical transmitting device comprises a control module and a service module;
the control module is configured to send a data transmission request to a controller, wherein the data transmission request indicates that the optical transmitting device has a requirement for sending first data to an optical receiving device in a first slot;
the control module is further configured to receive configuration information from the controller, wherein the configuration information indicates the optical transmitting device to send the first data in the first slot based on a first amplitude compensation coefficient of a first optical channel in an optical interconnection network, and the first optical channel is used to transmit, to the optical receiving device in the first slot, an optical signal sent by the optical transmitting device;
the control module is further configured to configure the first amplitude compensation coefficient for the service module in the first slot based on an indication of the configuration information; and
the service module is configured to carry the first data on a first optical signal in the first slot based on the first amplitude compensation coefficient, and then input the first optical signal on which amplitude compensation is performed into the first optical channel.

23. A method, comprising:
receiving configuration information from a controller, wherein the configuration information is sent by the controller to an optical receiving device based on a data transmission request from an optical transmitting device, the data transmission request indicates that the optical transmitting device has a requirement for sending first data to the optical receiving device in a first slot, the configuration information indicates the optical receiving device to receive the first data in the first slot based on a first amplitude compensation coefficient of a first optical channel in an optical interconnection network, and the first optical channel is used to transmit, to the optical receiving device in the first slot, an optical signal sent by the optical transmitting device; and
recovering, in the first slot based on the first amplitude compensation coefficient according to an indication of the configuration information, the first data from a first optical signal that is output by the first optical channel, wherein the first optical signal is an optical signal that is input by the optical transmitting device to the first optical channel in the first slot and that carries the first data.

24. An optical receiving device, wherein the optical receiving device comprises a control module and a service module;
the control module is configured to receive configuration information from a controller, wherein the configuration information is sent by the controller based on a data transmission request, the data transmission request indicates that an optical transmitting device has a requirement for sending first data to the optical receiving device in a first slot, the configuration information indicates the optical receiving device to receive the first data in the first slot based on a first amplitude compensation coefficient of a first optical channel in an optical interconnection network, and the first optical channel is used to transmit, to the optical receiving device in the first slot, an optical signal sent by the optical transmitting device;
the control module is further configured to configure the first amplitude compensation coefficient for the service module in the first slot based on an indication of the configuration information; and
the service module is configured to recover, in the first slot based on the first amplitude compensation coefficient, the first data from a first optical signal that is output by the first optical channel, wherein the first optical signal is an optical signal that is input by the optical transmitting device to the first optical channel in the first slot and that carries the first data.
